# EUROPEAN PATENT APPLICATION

(11) **EP 3 500 021 A1**
(43) Date of publication of application: **19.06.2019**
(21) Application number: 18204876.9
(22) Date of filing: 07.11.2018
(51) Int. Cl.: H04W 72/04, H04W 64/00

(54) **ELECTRONIC DEVICE FOR PERFORMING WIRELESS DEVICE TO DEVICE COMMUNICATION**

(30) Priority: 14.12.2017 KR 20170172096 U
(71) Applicant: Samsung Electronics Co., Ltd., Gyeonggi-do 16677 (KR)
(72) Inventor: NAM, Choun Jong, 16953 Gyeonggi-do, (KR); LEE, Jung Hun, 16699 Gyeonggi-do, (KR); KANG, Doo Suk, 16664 Gyeonggi-do, (KR); LEE, Sun Key, 13607 Gyeonggi-do, (KR); CHOI, Bo Kun, 08090 Seoul, (KR)
(74) Representative: HGF Limited

(57) **Abstract**

An electronic device includes at least one wireless communication circuit positioned, and at least one processor operatively connected to the wireless communication circuit. The wireless communication circuit includes an omnidirectional first wireless communication circuit having a first frequency and a first coverage and a directional second wireless communication circuit having a second frequency higher than the first frequency and a second coverage smaller than the first coverage. The processor is configured to obtain control information including data associated with a location of an external device, from the external device through the first wireless communication circuit, to set a beamforming attribute associated with the second wireless communication circuit, based on the data, and to make a communication connection to the external device through the second wireless communication circuit, by using the beamforming attribute.

## Description

### CROSS-REFERENCE TO RELATED APPLICATION(S)

This application is based on and claims priority under to Korean Patent Application No. 10-2017-0172096, filed on December 14, 2017, in the Korean Intellectual Property Office, the disclosure of which is incorporated by reference herein its entirety.

### BACKGROUND

### 1. Field

The present disclosure relates to a communication method between electronic devices by using wireless communication and a technology for controlling an electronic device.

### 2. Description of Related Art

In recent years, research on a device with mobility has been increasing to improve user convenience. Device-to-device communication may be used to control the device with mobility.

For example, the device with mobility (e.g., a drone) may move in response to a radio control signal generated in a separate manipulation device. For the purpose of controlling the device with mobility, a wireless communication connection may be established between the manipulation device and the device with mobility.

For the purpose of satisfying the continuously increasing demand for the traffic of wireless data, wireless communication systems have been developed to support the higher data transmission rate. 5G systems or next generation communication systems such as Institute of Electrical and Electronics Engineers (IEEE) 802.11 ad wireless gigabit alliance (WiGig) have recently supported the transmission and reception of signals of high millimeter wave (mmWave) frequency band.

The mmWave may generally refer to an ultra-high frequency of 30 GHz to 300 GHz; as propagation path loss occurs in the case where the ultra-high frequency is used, a beamforming technology to increase antenna transmission and/or reception efficiency may be used by concentrating transmission and/or reception power in a narrow space.

The above information is presented as background information only to assist with an understanding of the present disclosure. No determination has been made, and no assertion is made, as to whether any of the above might be applicable as prior art with regard to the present disclosure.

### SUMMARY

In the case of transmitting/receiving a large amount of data with the development of the wireless communication system or the expansion or change of a bandwidth, an ultra-high frequency band such as 60 GHz or the like may be used. The communication system of the ultra-high frequency band may be also used between electronic devices.

However, in the signal of the ultra-high frequency band, the coverage is small, and the communication connection is unstable; for the purpose of controlling the electronic devices by using the ultra-high frequency band, the signal may be transmitted or received between the electronic devices by using a plurality of communication schemes.

Aspects of the present disclosure are to address at least the above-mentioned problems and/or disadvantages and to provide at least the advantages described below. Accordingly, an aspect of the present disclosure is to provide a method of performing wireless communication between electronic devices by using a plurality of communication schemes and an electronic device performing the same.

In accordance with an aspect of the present disclosure, an electronic device may include a housing, at least one wireless communication circuit positioned inside the housing or connected to the housing, at least one processor operatively connected to the wireless communication circuit, and a memory operatively connected to the processor. The wireless communication circuit may include an omni-directional first wireless communication circuit having a first frequency and a first coverage and a directional second wireless communication circuit having a second frequency higher than the first frequency and a second coverage smaller than the first coverage. The memory may store instructions that, when executed, cause the processor to obtain control information including data associated with a location of an external device, from the external device through the first wireless communication circuit, to set a beamforming attribute associated with the second wireless communication circuit, based on the data, and to make a communication connection to the external device through the second wireless communication circuit, by using the beamforming attribute.

In accordance with another aspect of the present disclosure, an electronic device may include a housing, at least one wireless communication circuit positioned inside the housing or connected to the housing, at least one movement mechanism, at least part of which is embedded in the housing or which is connected to the housing, a navigation circuit controlling the movement mechanism, a processor operatively connected to the wireless communication circuit, the movement mechanism, and the navigation circuit and controlling the wireless communication circuit, the movement mechanism, and the navigation circuit, and a memory operatively connected to the processor. The wireless communication circuit may include an omni-directional first wireless communication circuit having a first frequency and a first coverage and a directional second wireless communication circuit having a second frequency higher than the first frequency and a second coverage smaller than the first coverage. The memory may store instructions that, when executed, cause the processor to exchange control information with an external device through the first wireless communication circuit, to determine whether the electronic device and the external device are spaced apart from each other within the second coverage, based at least partly on the first data, when the electronic device and the external device are spaced apart from each other beyond the second coverage, to cause the electronic device and the external device to move closer to each other so as to be within the second coverage, and while the electronic device and the external device are spaced apart from each other within the second coverage, to exchange non-control information with the external device through the second wireless communication circuit. The control information may include first data associated with at least one of a location of the external device and/or a location of the electronic device.

According to embodiments of the present disclosure, by using a plurality of wireless communication methods, the ultra-high frequency band communication between electronic devices may be connected, and data may be transmitted or received between the electronic devices.

Besides, a variety of effects directly or indirectly understood through this disclosure may be provided.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a block diagram of an electronic device according to an embodiment;
FIG. 2 illustrates a block diagram of an external device, according to an embodiment;
FIG. 3 is an operation scenario between an electronic device and an external device, according to an embodiment;
FIG. 4 is a flowchart of a method in which an electronic device and an external device make communication connection, according to an embodiment;
FIG. 5 illustrates communication connection operation between an electronic device and an external device, according to an embodiment;
FIG. 6 is a view for describing a beamforming attribute determining method between an electronic device and an external device, according to an embodiment;
FIG. 7 is a view for describing determining a beamforming attribute of an electronic device after a communication connection, according to an embodiment;
FIG. 8 illustrates an operation scenario between an electronic device and an external device, according to an embodiment;
FIG. 9 is an operation flowchart of an electronic device according to a scenario of FIG. 8;
FIG. 10 is an operation flowchart between an electronic device and an external device according to a scenario of FIG. 8;
FIG. 11 illustrates an operation scenario between an electronic device and an external device, according to an embodiment;
FIG. 12 illustrates an operation scenario between an electronic device and an external device, according to an embodiment;
FIG. 13 illustrates an operation scenario between an electronic device and an external device, according to an embodiment;
FIG. 14 is a block diagram of an electronic device in a network environment, according to various embodiments;
FIG. 15 is a block diagram of an unmanned flight device, according to an embodiment; and
FIG. 16 is a diagram illustrating a platform of an unmanned flight device, according to an embodiment.

### DETAILED DESCRIPTION

Hereinafter, various embodiments of the present disclosure may be described with reference to accompanying drawings. Accordingly, those of ordinary skill in the art will recognize that modification, equivalent, and/or alternative on the various embodiments described herein can be variously made without departing from the scope and spirit of the present disclosure.

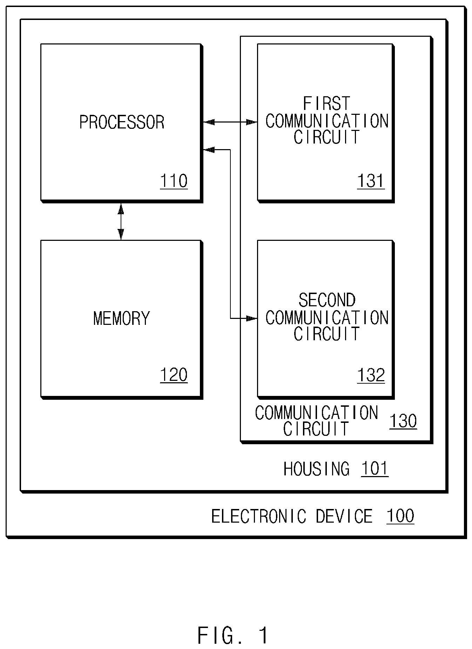

FIG. 1 illustrates a block diagram of an electronic device according to an embodiment.

According to an embodiment, an electronic device 100 may include a housing 101, and may include a processor 110, a memory 120, or a communication circuit 130 inside the housing 101. In various embodiments, the electronic device 100 may omit a part of the above-mentioned components or may further include other components. For example, a component such as a display, a camera, a battery, or an input/output interface may be further included in the electronic device 100.

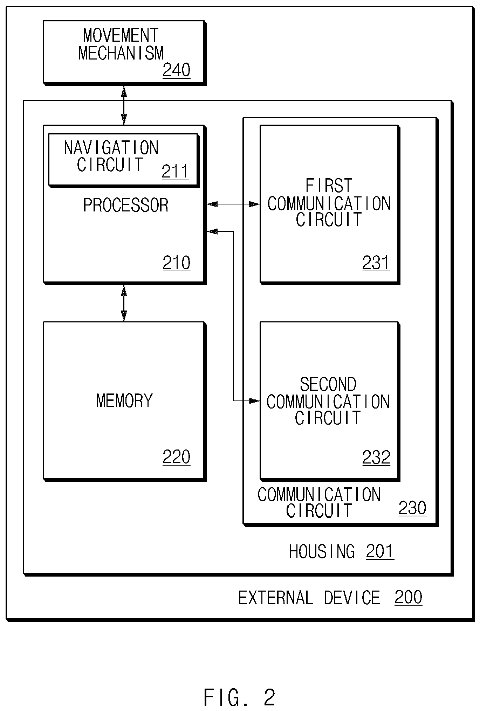

According to an embodiment, the processor 110 may process or transmit a signal associated with the control of the electronic device 100. According to an embodiment, the processor 110 may be disposed inside the housing 101 and may be electrically or operatively connected to the memory 120 and the communication circuit 130. According to an embodiment, the processor 110 may generate control information for controlling the movement of an external device (e.g., an external device 200 of FIG. 2) and may transmit the control information to the external device through the communication circuit 130. The processor 110 may execute instructions stored in the memory 120. For example, the processor 110 may perform an operation according to embodiments illustrated below.

The memory 120 may store at least one application or data associated with the operation of the electronic device 100. According to an embodiment, the memory 120 may store an application program (e.g., an operation application program) for controlling the external device (e.g., the external device 200 of FIG. 2). According to various embodiments, the application program may include instructions for transmitting, to the external device 200, pose change information of an external device and control information for moving the external device 200 in response to the movement of the electronic device 100.

According to an embodiment, the communication circuit 130 may be disposed inside the housing 101 and may be operatively connected to the processor 110. According to an embodiment, the electronic device 100 may exchange a signal with the external device through the communication circuit 130. For example, the electronic device 100 may exchange a user data signal (or a non-control signal) including an image or content such as an image or a control signal including information for exchanging the data or control information for controlling the external device, with the external device through the communication circuit 130.

According to an embodiment, the communication circuit 130 may support a plurality of communication schemes. To this end, the communication circuit 130 may include a first communication circuit 131 for transmitting or receiving a first frequency signal having a first coverage and a second communication circuit 132 for transmitting or receiving a frequency signal of a band, which is higher than the first frequency signal, having a second coverage smaller than the first coverage. According to an embodiment, the first communication circuit 131 and the second communication circuit 132 may be implemented with one chip or separate chips. According to an embodiment, the first communication circuit 131 and the second communication circuit 132 may be included in a communication module 1490.

According to an embodiment, the first communication circuit 131 may be an omni-directional communication circuit. The first communication circuit 131 may transmit or receive a signal of an unlicensed band and may transmit or receive a signal of a frequency lower than the second communication circuit 132. For example, the first communication circuit 131 may support first communication compliant with the Wi-Fi 802.11ac protocol. Hereinafter, for example, the first communication may be referred to as "1 GHz, 2.4 GHz, or 5 GHz communication".

According to an embodiment, the first communication circuit 131 may be a directional communication circuit. The second communication circuit 132 may transmit or receive a signal of an unlicensed band and may transmit or receive a signal of a frequency higher than the first communication circuit 131. The signal transmitted or received by the second communication circuit 132 may have directivity by beamforming. For example, the second communication circuit 132 may support second communication compliant with the Wi-Fi 802.11 ad protocol. Hereinafter, for example, the second communication may be referred to as "60 GHz communication".

Table 1 illustrated below indicates the communication characteristic according to 802.11ac Wi-Fi and 802.11ad WiGig.

Table 1 indicates the signal characteristic of the 802.11ac Wi-Fi communication and 802.11ad Wi-Fi communication.

**[Table 1]**

| | 802.11ac Wi-Fi | 802.11ad Wi-Fi |
|---|---|---|
| Frequency Band | 2.4/5 GHz | 60 GHz |
| PHY Rate | Max about 433 Mbps (150 Mbps@2.4 GHz) | Max 4.6 Gps |
| Coverage | 100 ∼ 250 m, possible to penetrate the wall | 10 ∼ 30 m, impossible to penetrate the wall |
| Interference | Severe | Very little (avoidance through short-range/ directivity) |
| Power consumption | Peak 0.5 W level | Peak 0.7 W level ('14,4 Q estimate) |
| Energy Efficiency | 891 Mbit/J | 2300 Mbit/J |

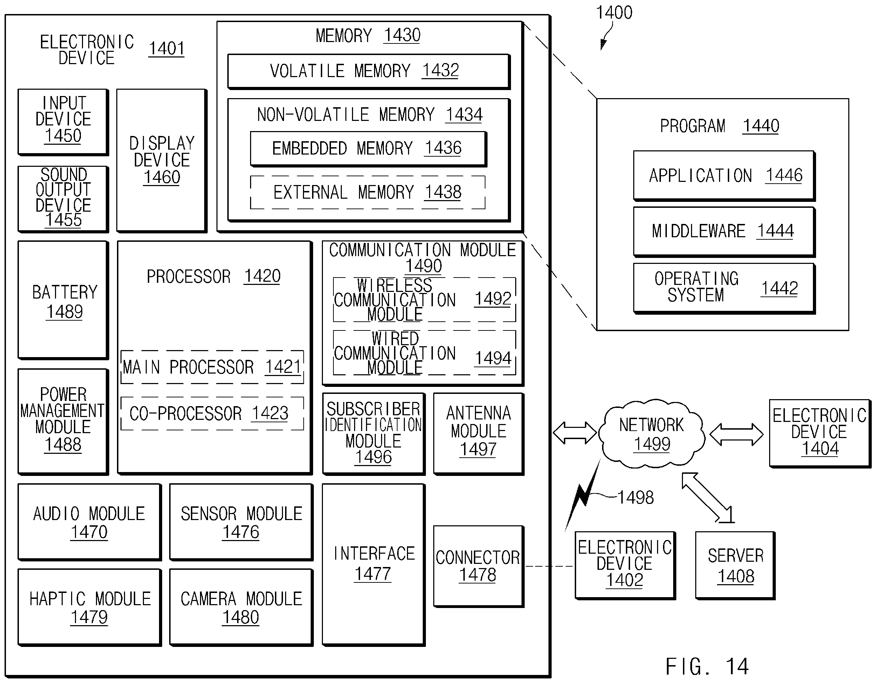

In addition, according to an embodiment, the electronic device 100 may include an input device. The input device may generate an input signal according to a user input of the electronic device 100. For example, the input device may include at least one of a stick-type device, a button-type device, or a touch pad-type device. The input device may be provided in the form of a touch screen panel. The input device may transmit a user input signal to the processor 110 in response to a user input. For example, the input signal may be a signal of 'throttle up/down, yaw left/right, pitch up/down, roll left/right, or the like'. The electronic device 100 may include components for measuring a location. According to an embodiment, for the purpose of obtaining data associated with the location of the electronic device 100, the electronic device 100 may include a sensor module (e.g., a sensor module 1476 of FIG. 14) or a communication module (e.g., the communication module 1490 of FIG. 14). For example, the sensor module may include a gyro sensor. For example, the communication module may include a global positioning system (GPS) module for obtaining GPS information. The communication module may include the communication circuit 130 for grasping the location of the electronic device 100.

FIG. 2 illustrates a block diagram of an external device, according to an embodiment.

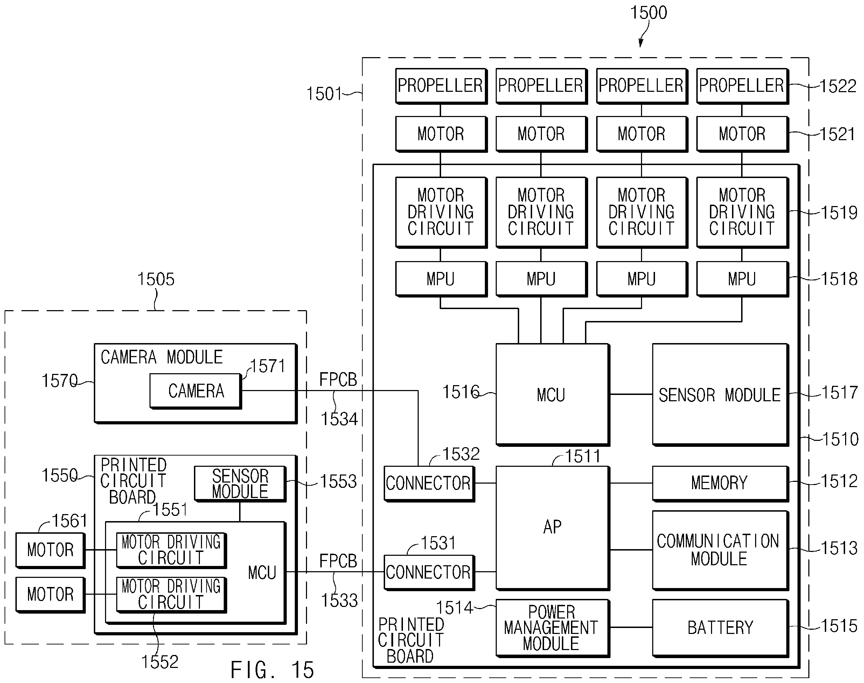

According to an embodiment, the external device 200 may be an electronic device that has mobility outside the electronic device 100. The electronic device 100 may be an external device from the point of view of the external device 200. For convenience of description, the electronic device 200 may be referred to as the "external device 200" for the purpose of distinguishing from the electronic device 100 of FIG. 1. According to an embodiment, the external device 200 may be a device capable of moving under control of the electronic device 100 or capable of moving autonomously depending on its own determination. For example, the external device 200 may be a device with mobility such as an unmanned flight device (e.g., an unmanned flight device 1500 of FIG. 15) or an unmanned vacuum cleaner.

According to an embodiment, the external device 200 may include a housing 201, and may include a processor 210, a memory 220, a communication circuit 230, or a movement mechanism 240 inside the housing 201. In various embodiments, the external device 200 may omit a part of the above-mentioned components or may further include other components. For example, a component such as a display, a camera, a battery or an input/output interface may be further included in the external device 200.

According to an embodiment, the movement mechanism 240 may be a driving means for moving the external device 200. For example, the movement mechanism 240 may include a motor and a propeller. At least one motor and at least one propeller may be included. According to an embodiment, at least part of the movement mechanism 240 may be connected to the housing 201. The movement mechanism 240 may be operatively connected to the processor 210 and may be controlled by the processor 210.

According to an embodiment, the processor 210 may include a navigation circuit 211 for controlling the movement mechanism 240. The navigation circuit 211 may be implemented by the processor 210. The movement mechanism 240 may be operatively connected to the navigation circuit 211.

According to an embodiment, the memory 220 may store at least one program, at least one application, at least one piece of data, or the like associated with the operation of the external device 200. According to an embodiment, the memory 220 may store a flight application associated with operation control for moving or rotating the external device 200. According to an embodiment, the memory 220 may store instructions associated with the movement of the external device 200, instructions for communication connection to the electronic device 100, or the like.

According to an embodiment, the processor 210 may process a signal associated with the control of the external device 200. According to an embodiment, the processor 210 may be electrically connected to the movement mechanism 240 and may operate the movement mechanism 240 based on a control signal from the electronic device 200. The processor 210 may move the movement mechanism 240 to a target point based on the control signal from the electronic device 200. The processor 210 may perform various operations according to the following embodiments.

According to an embodiment, the communication circuit 230 may support a plurality of communication protocols. For example, the communication circuit 230 may include a first communication circuit 231 for transmitting or receiving a first frequency signal having a first coverage and a second communication circuit 232 for transmitting or receiving a frequency signal of a band, which is higher than the first frequency signal, having a second coverage smaller than the first coverage. According to an embodiment, the first communication circuit 231 and the second communication circuit 232 may be implemented with one chip or separate chips. According to an embodiment, the communication circuit 230 may be included in the communication module 1490.

According to an embodiment, the first communication circuit 231 may be an omni-directional communication circuit. The first communication circuit 231 may transmit or receive a signal of an unlicensed band and may transmit or receive a signal of a frequency lower than the second communication circuit 232. For example, the first communication circuit 231 may support first communication compliant with the Wi-Fi 802.1 1ac protocol. Hereinafter, for example, the first communication may be referred to as "2.4 GHz or 5 GHz communication".

According to an embodiment, the first communication circuit 231 may be a directional communication circuit. The second communication circuit 232 may transmit or receive a signal of an unlicensed band and may transmit or receive a signal of a frequency higher than the first communication circuit 231. The signal transmitted or received by the second communication circuit 232 may have directivity by beamforming. For example, the second communication circuit 232 may support second communication compliant with the Wi-Fi 802.11ad protocol. Hereinafter, for example, the second communication may be referred to as "60 GHz communication".

According to an embodiment, the external device 200 and the electronic device 100 may perform first communication between each other through the first communication circuits 131 and 231 and may perform second communication between each other through the second communication circuits 132 and 232.

According to an embodiment, while the first communication is performed through the first communication circuits 131 and 231, the second communication connection through the second communication circuits 132 and 232 may be performed; while the second communication is connected, the first communication connection may be maintained.

In the following embodiments, the electronic device may be the electronic device 100 of FIG. 1 or the external device 200. From the point of view of the electronic device 100, the external device 200 may be an external device; from the point of view of the external device 200, the electronic device 100 may be an external device.

According to an embodiment, the external device 200 may include components for measuring the location of the external device 200. According to an embodiment, for the purpose of obtaining data associated with the location of the external device 200, the external device 200 may include a sensor module (e.g., the sensor module 1476 of FIG. 14) or a communication module (e.g., the communication module 1490 of FIG. 14). For example, the sensor module may include a gyro sensor. For example, the communication module may include a GPS module for obtaining GPS information. The communication module may include the communication circuit 230 for grasping the location of the external device 200. For example, the external device 200 may obtain data associated with the location of the corresponding device, by using the first communication. According to an embodiment, an electronic device

(e.g., the electronic device 100 of FIG. 1 or the external device 200 of FIG. 2) may include a housing, at least one wireless communication circuit positioned inside the housing or connected to the housing, at least one processor operatively connected to the wireless communication circuit, and a memory operatively connected to the processor. The wireless communication circuit may include an omni-directional first wireless communication circuit having a first frequency and a first coverage and a directional second wireless communication circuit having a second frequency higher than the first frequency and a second coverage smaller than the first coverage. The memory may store instructions that, when executed, cause the processor to obtain control information including data associated with a location of an external device, from the external device through the first wireless communication circuit, to set a beamforming attribute associated with the second wireless communication circuit, based on the data, and to make a communication connection to the external device through the second wireless communication circuit, by using the beamforming attribute.

According to an embodiment, the electronic device may transmit or receive non-control information to or from the external device through the second wireless communication circuit.

According to an embodiment, the instructions, when executed by the processor, may cause the processor to determine parameters associated with the beamforming attribute based on the data.

According to an embodiment, the control information may include sector information, and the instructions, when executed by the processor, may cause the processor to make the communication connection based on the sector information.

According to an embodiment, the instructions, when executed by the processor, may cause the processor to activate an operation associated with the second wireless communication circuit based on the control information.

According to an embodiment, the instructions, when executed by the processor, may cause the processor to turn on the second wireless communication circuit or to change a mode of the second wireless communication circuit to a wake-up mode.

According to an embodiment, each of the first frequency and the second frequency may be an unlicensed band. According to an embodiment, the second frequency may include a 60 GHz band.

According to an embodiment, the data associated with the location may include at least one of global positioning system (GPS) data, latitude, longitude, altitude, coordinates, azimuth, or housing orientation.

According to an embodiment, the non-control information may include at least one of audio data, image data, or video data.

According to an embodiment, a communication connection between the external device and the electronic device through the first wireless communication circuit may be maintained during the communication connection through the second wireless communication circuit.

According to an embodiment, the electronic device may include at least one movement mechanism, at least part of which is embedded in the housing or which is connected to the housing.

According to an embodiment, the instructions, when executed by the processor, may cause the processor to cause the electronic device and the external device to be located within the second coverage.

According to an embodiment, an electronic device may include a housing, at least one wireless communication circuit positioned inside the housing or connected to the housing, at least one movement mechanism, at least part of which is embedded in the housing or which is connected to the housing, a navigation circuit controlling the movement mechanism, a processor operatively connected to the wireless communication circuit, the movement mechanism, and the navigation circuit and controlling the wireless communication circuit, the movement mechanism, and the navigation circuit, and a memory operatively connected to the processor. The wireless communication circuit may include an omni-directional first wireless communication circuit having a first frequency and a first coverage and a directional second wireless communication circuit having a second frequency higher than the first frequency and a second coverage smaller than the first coverage.

According to an embodiment, the memory may store instructions that, when executed, cause the processor to exchange control information with an external device through the first wireless communication circuit, to determine whether the electronic device and the external device are spaced apart from each other within the second coverage, based at least partly on the first data, when the electronic device and the external device are spaced apart from each other beyond the second coverage, to cause the electronic device and the external device to move closer to each other so as to be within the second coverage, and while the electronic device and the external device are spaced apart from each other within the second coverage, to exchange non-control information with the external device through the second wireless communication circuit. The control information may include first data associated with at least one of a location of the external device and/or a location of the electronic device.

According to an embodiment, the first data may include at least one of GPS data, latitude, longitude, altitude, coordinates, azimuth, or housing orientation.

According to an embodiment, the movement mechanism may include a plurality of propulsion systems, which is connected to the housing or which is at least partly embedded in the housing.

According to an embodiment, the instructions, when executed by the processor, may cause the processor to cause the navigation circuit to move the electronic device to be closer to the external device while the external device does not move substantially.

According to an embodiment, the instructions, when executed by the processor, may cause the processor to determine a direction by using the first data while the electronic device and the external device are spaced apart from each other within the second coverage, and to perform beamforming on the second wireless communication circuit based at least partly on the determined direction.

According to an embodiment, the non-control information may include at least one of audio data, image data, or video data.

According to an embodiment, an electronic device may include a housing, at least one wireless communication circuit positioned inside the housing or connected to the housing, at least one processor operatively connected to the wireless communication circuit, and a memory operatively connected to the processor. The wireless communication circuit may include an omni-directional first wireless communication circuit having a first frequency and a first coverage and a directional second wireless communication circuit having a second frequency higher than the first frequency and a second coverage smaller than the first coverage.

The memory may store instructions that, when executed, cause the processor to exchange control information with an external mobile electronic device through the first wireless communication circuit, to determine whether the external mobile electronic device is spared apart from the electronic device within the second coverage, based at least partly on the first data, to cause the external mobile electronic device to move closer to the electronic device so as to be within the second coverage when the external mobile electronic device is spaced apart from the electronic device beyond the second coverage, and to exchange non-control information with the external mobile electronic device through the second wireless communication circuit while the electronic device and the external mobile electronic device are spaced apart from each other within the second coverage. The control information may include first data associated with at least one of a location of the external mobile electronic device and/or a location of the electronic device.

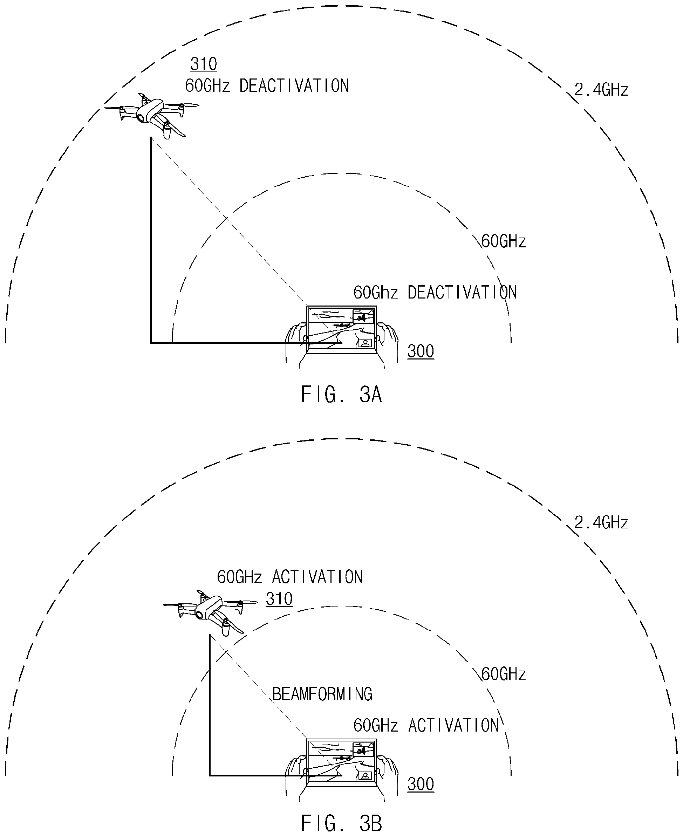

FIG. 3 is an operation scenario between an electronic device and an external device, according to an embodiment.

According to an embodiment, an electronic device 300 and an external device 310 may obtain information for second communication connection and beamforming, through first communication and may make the second communication connection based on the information. In the following description of FIG. 3, the first communication may be referred to as "2.4 GHz communication", and the second communication may be referred to as "60 GHz communication". However, the communication band of the first communication may have a first frequency and a first coverage, and the second communication may include a communication band having a second coverage smaller than the first coverage. The communication band of each of the first communication and second communication may be an unlicensed band. According to an embodiment, the first communication may be a communication band in which omni-directional communication is possible. According to an embodiment, the second communication may be a communication band in which directional communication is possible.

According to an embodiment, the electronic device 300 may be the same as or similar to the electronic device 100 of FIG. 1, and the external device 310 may be the same as or similar to the external device 200 of FIG. 2.

Referring to (a) of FIG. 3, when the electronic device 300 and the external device 310 are located outside the 60 GHz communication coverage and within the 2.4 GHz communication coverage, the 60 GHz communication (or the communication circuit) between each other may be in a deactivated state. At this time, since the external device 310 is located within the 2.4 GHz communication coverage, the electronic device 300 and the external device 310 may exchange a signal through 2.4 GHz communication.

Referring to (b) of FIG. 3, in the case where the electronic device 300 and the external device 310 attempt the 60 GHz communication, the electronic device 300 and the external device 310 may activate an operation associated with the 60 GHz communication. In the case where the external device 310 is located within a 60 GHz range by the control according to a user's manipulation of the electronic device 300 or by its own determination between the external device 310 and electronic device 300, the electronic device 300 and the external device 310 may activate the operation associated with the 60 GHz communication.

The case of attempting the 60 GHz communication may include the case where the electronic device 300 and the external device 310 approach a coverage in which the 60 GHz communication is possible, are able to be close to the coverage, or are located within the coverage.

The activating of the operation associated with the 60 GHz communication may include an operation of activating a communication circuit performing the 60 GHz communication or activating an application associated with the 60 GHz communication. For example, the operation of activating a 60 GHz communication circuit may be operations for performing the 60 GHz communication such as an operation of turning on the communication circuit, an operation of waking up the communication circuit, an operation of starting 60 GHz communication connection, or the like.

According to an embodiment, in the case where the 60 GHz communication is not needed even while the electronic device 300 and the external device 310 are located within a range in which the 60 GHz communication is possible, the electronic device 300 and the external device 310 may perform the 2.4 GHz communication without performing the 60 GHz communication. The electronic device 300 or the external device 310 may deactivate the operation associated with the 60 GHz communication.

The deactivating of the operation associated with the 60 GHz communication may include an operation of deactivating a communication circuit performing the 60 GHz communication or deactivating the application associated with the 60 GHz communication. For example, the deactivating may include turning off a modem associated with the 60 GHz communication or transitioning to a sleep state.

According to an embodiment, a signal of 60 GHz may have directivity. When transmitting or receiving the signal of 60 GHz, the electronic device 300 and/or the external device 310 may perform beamforming to generate a signal in a specific direction.

According to an embodiment, as illustrated in (a) of FIG. 3, the external device 310 and the electronic device 300 may make the connection according to a 60 GHz communication connection procedure such that the external device 310 and the electronic device 300 perform 2.4 GHz communication and then perform 60 GHz communication. According to an embodiment, the external device 310 and the electronic device 300 may make all or part of communication connection according to the existing Wi-Fi 802.1 1ad protocol.

According to an embodiment, for the purpose of reducing a time required for the beamforming, the electronic device 300 and the external device 310 may exchange a control signal including data associated with a location, while performing the first communication.

The data associated with the location may include location information, direction information, or the like, and may include at least one of, for example, GPS data, latitude, longitude, altitude, coordinates, azimuth, or a housing orientation.

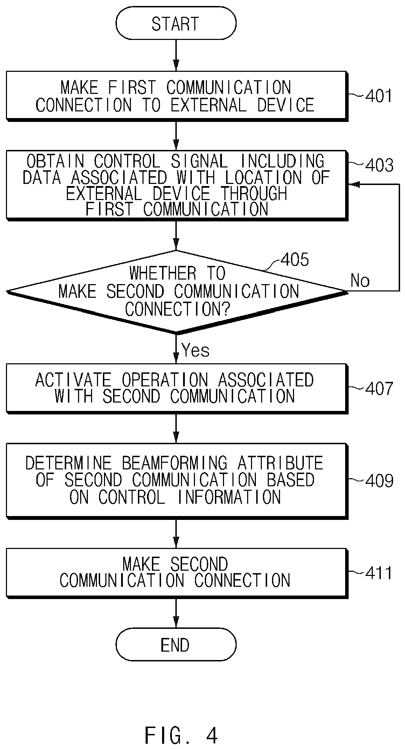

FIG. 4 is a flowchart of a method in which an electronic device and an external device make 60 GHz communication connection, according to an embodiment.

The operations illustrated in FIG. 4 may be performed by the electronic device 100 of FIG. 1 (or the electronic device 300 of FIG. 3) or the processor 110. For example, the operations may be implemented with instructions capable of being performed (or executed) by the processor 110 of the electronic device 100. The instructions may be stored in, for example, a computer-readable recording medium or the electronic device 100 illustrated in FIG. 1. Hereinafter, in the description of FIG. 4, the instructions may be collectively referred to as the "operation of an electronic device" and an embodiment may be described.

According to an embodiment, the electronic device may perform first communication with an external device (e.g., the external device 200 of FIG. 2 or the external device 310 of FIG. 3) and then may connect second communication. In this case, for the purpose of reducing a time required to connect to the second communication or improving the accuracy of a second communication connection, the electronic device may obtain related information in advance from an unmanned electronic device through the first communication and may use the information obtained for the communication connection.

In operation 401, the electronic device may make a first communication connection to the external device. For example, the first communication connection may be the communication connection according to a communication protocol supporting a 2.4 GHz or 5 GHz band.

In operation 403, the electronic device may receive a control signal including data or the like associated with the location of the external device through the first communication. For example, the data associated with the location may include at least one of GPS data, latitude, longitude, altitude, coordinates, azimuth, or a housing orientation.

In operation 405, the electronic device may determine whether to make the second communication connection. According to an embodiment, the electronic device may determine whether to make the second communication connection, based on the control information or information about the electronic device. When not making the second communication connection, the electronic device may perform operation 403.

When attempting to make the second communication connection, in operation 407, the electronic device may activate an operation associated with second communication. The operation associated with the second communication may be operations for performing the second communication such as an operation of turning on or off a second communication circuit, an operation of waking up the second communication circuit, an operation of starting the second communication connection, and the like, an operation of executing an application associated with the second communication, or the like. The electronic device may activate the operation associated with the second communication and may perform a standby operation for the second communication.

In operation 409, the electronic device may determine the beamforming attribute of the second communication. According to an embodiment, the electronic device may determine beamforming attribute of the second communication, based on the control information obtained in operation 403, in particular, the control signal or the data associated with the location. For example, the electronic device may grasp the location of an external device or a relative location between the electronic device and an external device, based on pieces of information such as altitude, longitude, and latitude and may perform beamforming such that the second communication with the corresponding electronic device is possible. The electronic device may further consider the location information of the corresponding electronic device. For example, the electronic device may determine the beamforming attribute based on location information of the external device and location information of the electronic device.

The beamforming attribute may be associated with a beam pattern. For example, the beamforming attribute may be specified by a beam direction, beam strength, or a beam width. The electronic device may determine a parameter associated with the beamforming attribute.

In operation 411, the electronic device may make the second communication connection to the external device. According to an embodiment, when making the second communication connection, the electronic device may use the beamforming attribute. The electronic device may apply parameters, which is determined based on the data associated with the location obtained from the external device through the first communication, and may make the second communication connection.

Hereinafter, each operation will be described in detail.

According to an embodiment, the first communication connection in operation 401 may be performed as follows.

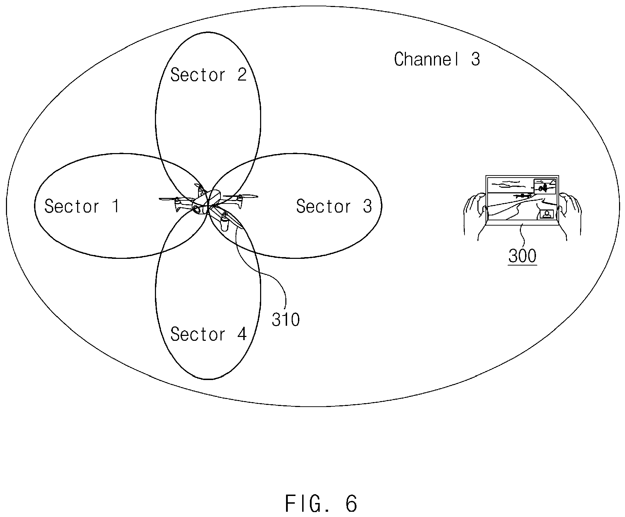

When power is applied to the external device, the first communication (e.g., Wi-Fi) of the external device may be activated, and the electronic device may operate in an access point (AP) mode, a station (STA) mode, a P2P mode, or the like. When the external device operates in the AP mode, the electronic device may operate in the STA mode. The electronic device may activate the first communication and may search for the SSID of the AP activated by the external device; as illustrated in FIG. 6, the electronic device may make the first communication connection.

The electronic device and the external device may determine whether to connect to the second communication in operation 405, as follows.

According to an embodiment, the electronic device may determine whether to connect to the second communication with the external device, based on at least one of data (e.g., altitude) associated with the location of the electronic device, the stored data size, a specified period, a distance from the external device, control information obtained from the external device through the first communication (or information associated with the state of the external device), or the association request of the second communication of the external device.

According to an embodiment, the electronic device may determine a relative distance between the external device and the electronic device, as follows. For the following operation, the external device and/or the electronic device may further include a distance measuring device (e.g., a sensor).

According to an embodiment, the electronic device or the external device may calculate the relative distance between the external device and the electronic device, based on the GPS data. According to an embodiment, the electronic device or the external device may calculate a distance by using the first communication. For example, the electronic device may calculate the distance by using IEEE 802.11 FTM protocol or may also calculate the distance through various measurement methods by using the radio of the first communication.

For example, for the purpose of determining that the electronic device is located in a range (hereinafter, communicable range) in which the second communication with the external device is connectable or in which the communication with the external device is possible, the reflection of wireless characteristics and antenna characteristics of the corresponding devices may be needed. According to an embodiment, a specific distance for determining the communicable range may be stored in the electronic device as a predetermined value. The distance value for determining the communicable range may be changed dynamically. In the case where the relative distance between the external device and the electronic device is shorter than the communicable range based on the distance value for determining the communicable range and the measured relative distance, the electronic device may determine that the 60 GHz communication is possible,.

According to an embodiment, the electronic device may determine whether the 60 GHz communication is connected, based on information such as a user input, a specified time, the size of specified captured data, a specified battery level, the movement path of the external device, the movement state of the external device, state information of the external device such as the distance between the electronic device and the external device, a request of the external device, or the like. For example, the electronic device may receive an event associated with the backup of the captured image of an external device, from a user and may determine whether communication using 60 GHz is connected, based on the event.

The operation of activating an operation associated with the second communication in operation 407 may be performed as follows.

According to an embodiment, when determining the second communication connection, the electronic device may activate an operation associated with a second communication circuit or may control the external device such that the electronic device and the external device activate the corresponding operation. For example, when determining the second communication connection, the electronic device may transmit the control signal that allows the external device to activate an operation associated with the second communication circuit of the external device.

When the electronic device determines the second communication connection, the electronic device may transmit information about the second communication connection, to the external device, may receive a control signal from the external device in response to the information, and may activate an operation associated with the second communication circuit. Alternatively, the electronic device may activate the operation associated with the second communication circuit, based on the determination of the electronic device. When the electronic device and the external device are not located within the second communication coverage, the activation of the second communication circuit may be postponed until the electronic device and the external device enter the corresponding coverage. Alternatively, when determining the second communication connection, the electronic device may activate the operation associated with the second communication circuit and may move such that the electronic device and the external device are located within the second communication coverage.

According to an embodiment, the information about the second communication connection may include information for providing a notification that the second communication connection is needed, a message for requesting the second communication connection, or information for synchronizing second communication between the electronic device and the external device. For example, the information about the second communication connection may include information for synchronizing an on-off state of the second communication between the electronic device and the external device.

According to an embodiment, when the second communication is not used, the power of the second communication circuit may be turned off or the second communication circuit may enter a sleep mode, and thus the current consumption may be reduced; when the second communication connection is determined, a voltage may be applied to the second communication circuit or the second communication circuit may enter a wake-up mode, and thus the second communication may be connected.

According to an embodiment, the activation operation may be performed at various time points such as a point in time when the external device moves within the second communication coverage, a point in time when the external device moves to a specified location, a point in time when the external device approaches the specified location, a point in time when the external device arrives at the specified location, and the like.

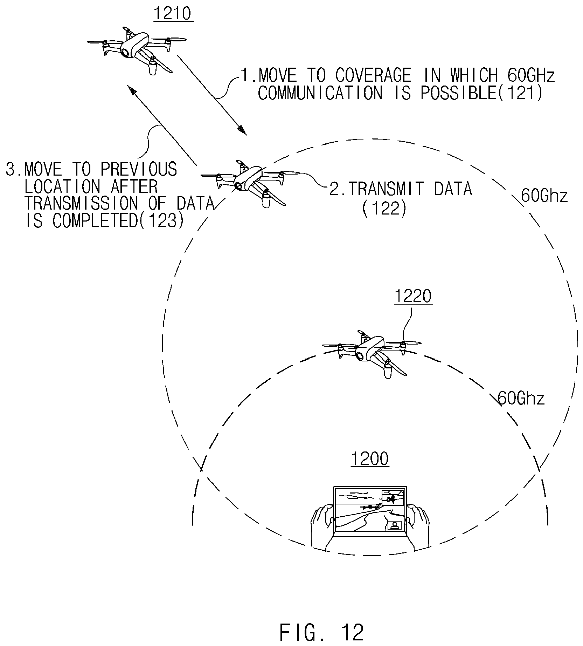

The electronic device may be executed in a STA mode, an AP mode, or a P2P mode for the second communication connection. For the purpose of reducing the current consumption of the external device, the electronic device may perform a communication mode, in which the electronic device does not enter the AP mode, the P2P (GO) mode, or a sleep mode, and may transmit and/or receive information associated with connection to the external device, through the first communication. At this time, the transmitted and/or received information may include a service set identifier (SSID), device information (e.g., media access control (MAC) address), channel information, sector information, a password, and/or a beam direction, as information associated with scan and connection. In the case where the device information is device information of the electronic device, in the case where the device information is device information of the external device, or in the case where the external device is a relay device (e.g., a relay device 1220 of FIG. 12), the device information may include at least one of pieces of information about the external device that is the final destination. The information associated with the connection through the first communication may be transmitted and/or received, and thus a time required for communication connection or current consumption for communication connection may be reduced.

According to an embodiment, the electronic device may activate the operation associated with the second communication and may allow the external device and the electronic device to move to a coverage in which the second communication connection and data transmission or reception are possible. An operation of causing the external device to move within a coverage range may be an operation in which the electronic device controls the movement of the external device with a user's manipulation or without the user's manipulation.

For example, the electronic device may allow the external device to move to a second communication coverage band based on the user's manipulation input; and the electronic device may notify the user that the external device enters the coverage, through an alarm or the like when the external device enters the coverage. For another example, the electronic device may request or allow the external device to move to the pre-specified location. The specified location may be transmitted during the initial communication; or in the case where the second communication connection is determined, the corresponding location may be determined in real time and the corresponding location may be transmitted in real time. Alternatively, the electronic device may specify a location to move based on the relative location with the external device.

For the purpose of determining whether the coverage is a coverage in which the second communication connection is possible, the electronic device may utilize the location information of the electronic device and the location information of the external device. In addition, the electronic device may determine whether the external device is located within the coverage in which the second communication connection is possible or whether the external device approaches the coverage, based on the signal strength of the first communication. The electronic device may calculate a distance based on the signal strength of the first communication and may determine whether the coverage is a coverage in which the second communication connection is possible. When the electronic device moves to the second communication coverage, the electronic device may store location information (or data associated with the location) of the external device before the movement, or may allow the external device to store the location information.

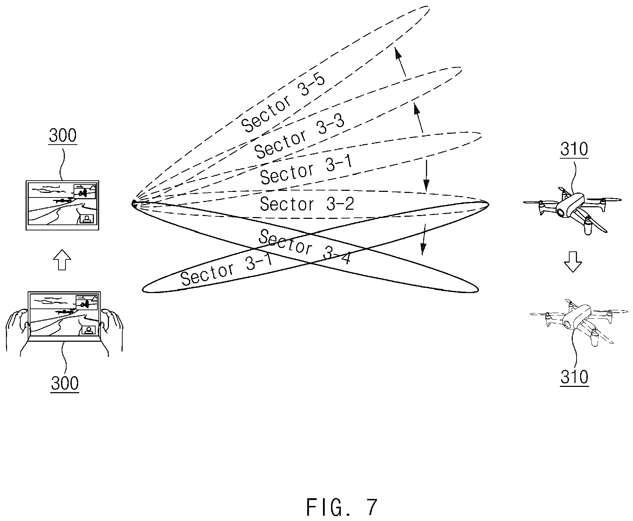

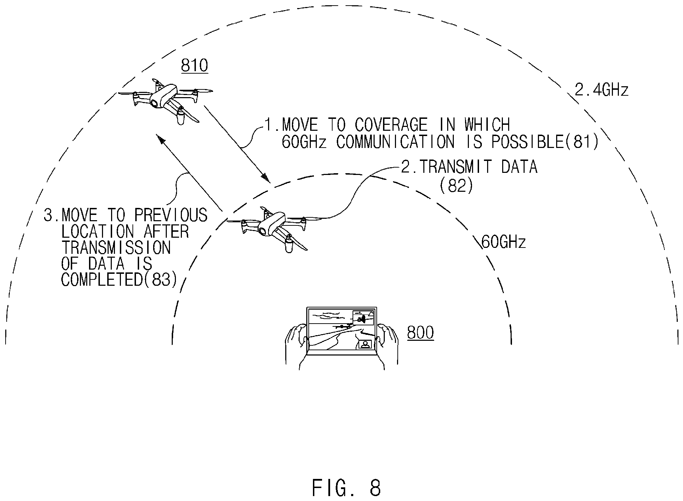

According to an embodiment in operation 409, the electronic device and the external device may determine a beamforming attribute or may allow a counterpart device to use a specific beamforming attribute. The electronic device and the external device may determine and control the beamforming attribute such as a beam width, a beam direction, or beam strength. Hereinafter, a method of determining the beamforming attribute will be described with reference to FIGS. 7 and 8.

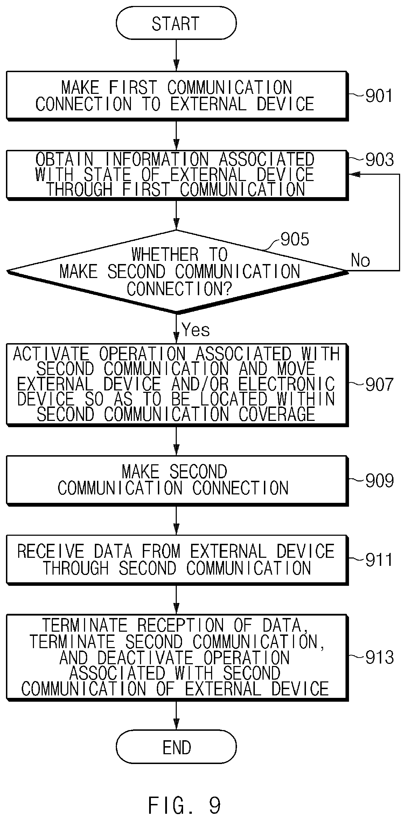

When the second communication connection between the electronic device and the external device is completed, the electronic device and the external device may perform various functions by using the second communication connection. The detailed description may refer to the description of FIG. 9 below.

According to an embodiment, the operations may be performed by a manipulation device such as the electronic device 100 of FIG. 1 or the electronic device 300 of FIG. 3 that controls the operation of the external device, or may be performed by the external device 200 of FIG. 2 or the external device 310 of FIG. 3. The electronic device and the external device may exchange location information or the like with each other and may make the second communication connection based on the corresponding information.

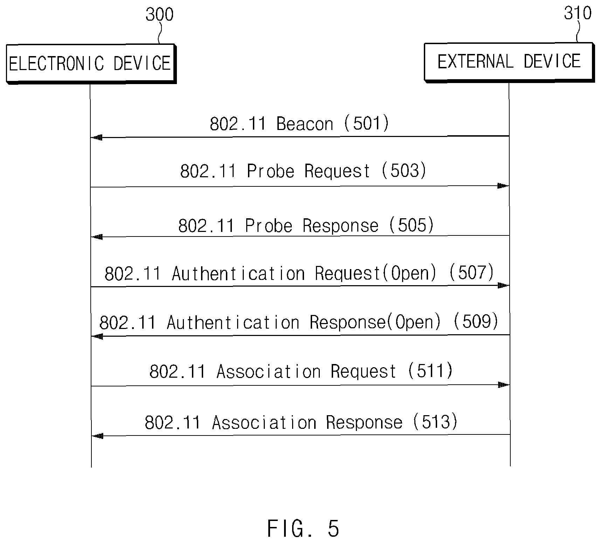

FIG. 5 illustrates communication connection operation between an electronic device and an external device, according to an embodiment.

In FIG. 5, the communication connection operation between the electronic device 300 (e.g., a controller) of FIG. 3 and an external device (e.g., unmanned flight device) will be described. An embodiment in FIG. 5 is exemplified as a device-to-device communication connection operation according to 802.11 communication protocol. However, in various embodiments of the present disclosure, the device-to-device communication connection operation may not be limited to the exemplification.

In operation 501, the external device 310 may transmit a beacon signal. The external device 310 may transmit the beacon signal such that the electronic device 300 senses the corresponding external device 310. The electronic device 300 may monitor the beacon signal.

In operation 503, the electronic device 300 may transmit a probe request. For example, the electronic device 300 may sense the beacon signal and then may transmit a probe request frame.

In operation 505, when obtaining the probe request, the external device 310 may transmit a probe response to the electronic device 300 in response to the probe request. In operation 503 and operation 505, an identifier for identifying a device from each other may be exchanged between devices.

In operation 507 and operation 509, the electronic device 300 and the external device 310 may perform an authentication procedure. The electronic device 300 may obtain the probe response and then may transmit an authentication request in response to the probe response. The external device 310 may transmit an authentication response in response to the authentication request.

When the authentication is performed between the electronic device 300 and the external device 310, the electronic device 300 and the external device 310 may establish association between each other. The electronic device 300 may transmit an association request to the external device 310, and the external device 310 may transmit an association response.

FIG. 6 is a view for describing a beamforming attribute determining method between an electronic device and an external device, according to an embodiment.

Hereinafter, a beamforming attribute determining method (e.g., operation 409 of FIG. 4) between an electronic device (e.g., the electronic device 300 of FIG. 3) and external device (e.g., the external device 310 of FIG. 3) will be described with reference to FIG. 6. FIG. 6 mainly illustrates the beamforming attribute determining method from the point of view of the electronic device 300. However, the following descriptions may be applied to the external device 310.

According to an embodiment, a task for connection may be performed such that the electronic device 300 and the external device 310 make a communication connection, and thus a time required to connect between the devices or the current consumption may be reduced through the task.

According to an embodiment, the electronic device 300 and the external device 310 may transmit and/or receive data associated with a location, channel information, an SSID, device information, sector information, a password, and/or information of a beam direction, prior to the second communication connection. The information may be referred to as a "control signal".

For the second communication connection to the external device 310, the electronic device 300 needs to recognize the channel to which the communication is connected and may determine the beam direction through a sector level sweep

(SLS) operation. To this end, as illustrated in FIG. 6, assuming that four channels are currently supportable and the number of sectors is eight, the electronic device 300 needs to perform 32 scan operations for each channel and for each sector.

The electronic device 300 may predict the direction of beam in advance, which the external device 310 needs to form, by using channel information, data associated with a location, or the like among the information obtained from the external device 310 and may transmit the direction of the beam predicted in advance to the external device 310. The external device 310 may scan the periphery of the predicted sector, based on the direction of the beam. As a result, a time and the current consumption required to connect between the devices may be reduced. Alternatively, the external device 310 may directly predict the direction of the beam. The external device 310 may receive predetermined information from the electronic device 300 and may predict the direction of the beam based on the corresponding information.

The external device 310 may scan the periphery of a specific sector in advance, based on the previously predicted beam direction; when finding the AP of the electronic device 300, the external device 310 may make the second communication connection to the corresponding AP.

Referring to FIG. 6, the external device 310 may scan four sectors from channel 1 to find the electronic device 300. However, as described above, when utilizing the previously obtained information, the external device 310 may fix the channel to '3' and may firstly scan sector 3.

The beamforming attribute determining method described in FIG. 6 may be used for various embodiments disclosed in the present disclosure.

FIG. 7 is a view for describing determining a beamforming attribute of an electronic device after a communication connection, according to an embodiment.

According to an embodiment, since a second communication uses a beamforming scheme, it may be important to track the beam direction between devices for smooth communication after a communication connection. Hereinafter, a beamforming attribute determining method after the second communication connection between the electronic device 300 and the external device 310 will be described with reference to FIG. 7. FIG. 7 mainly illustrates the beamforming attribute determining method from the point of view of the electronic device 300. However, the following descriptions may be applied to the external device 310.

According to an embodiment, when both the electronic device 300 and the external device 310 are devices having mobility and may maintain the corresponding beamforming attribute after performing beamforming having a specific beam direction at a specific location, it is difficult to maintain a smooth communication in the case where locations of the electronic device 300 or the external device 310 are changed.

For example, as illustrated in FIG. 7, when at the beginning of the connection between the electronic device 300 and the external device 310, sector 3-1 is used as it is in the case where the electronic device 300 uses the beam in the direction of sector 3-1 and then the electronic device 300 moves upward and the external device 310 moves downward, it is difficult to smoothly communicate with each other.

The electronic device 300 may transmit a packet to a peripheral sector (sector 3-2 or sector 3-3) to maintain the connection; in the case where the electronic device 300 does not find the external device 310, the electronic device 300 may recognize that the external device 310 is located in sector 3-4 after transmitting a packet to the wider range (sector 3-4 or sector 3-5).

According to an embodiment, when the external device 310 fails to find the electronic device 300 due to the change in a location, the external device 310 may transmit a packet to the peripheral sector other than the current sector. In the case where the electronic device 300 is not found, packet transmission may be attempted to a wider range (sector 3-4 or sector 3-5).

In this case, it may take time for the electronic device 300 and/or the external device 310 to determine the proper beamforming attribute, and the situation where the entire sector needs to be scanned may occur.

To this end, the electronic device 300 and/or the external device 310 may transmit information for periodically determining the beamforming attribute, periodically or randomly if necessary. For example, even after the communication connection, the electronic device 300 and/or the external device 310 may transmit data associated with the location of the corresponding device to a counterpart device.

According to an embodiment, the information may be exchanged over the first communication that is relatively stable compared with the second communication. As such, the electronic device 300 and/or the external device 310 may calculate a relative location and a direction based on the data associated with the location, and may find the sectors to be used, and thus may maintain a smooth communication connection with each other.

FIG. 8 illustrates an operation scenario between an electronic device and an external device, according to an embodiment.

According to an embodiment, when being outside the 60 GHz coverage range even when a 60 GHz connection is required, an electronic device 800 (e.g., the electronic device 100 of FIG. 1 or the electronic device 300 of FIG. 3) and an external device 810 (e.g., the external device 200 of FIG. 2 or the external device 310 of FIG. 3) may operate to be closer to each other.

According to an embodiment, the electronic device 800 may perform 2.4 GHz communication and then may determine whether to connect to 60 GHz communication; when determining the 60 GHz communication connection, in operation 81, the electronic device 800 may allow the external device 810 to move within a coverage in which the 60 GHz communication is possible, for 60 GHz communication with the external device 810.

According to an embodiment, the electronic device 800 may transmit a control signal to the external device 810 such that the external device 810 moves within the 60 GHz communication.

According to an embodiment, after the 60 GHz communication connection, in operation 82, the electronic device 800 may obtain data from the external device 810 by using the 60 GHz communication. The electronic device 800 may back up data or may transmit and/or receive the data in real time. At this time, the 2.4 GHz communication may be maintained, or pieces of session information for the 2.4 GHz communication connection may be stored in the electronic device 800.

When the obtainment of the data is completed, the electronic device 800 may deactivate the 60 GHz communication. The electronic device 800 may deactivate the 60 GHz communication, in response to the obtainment completion of the data or based on a user input.

When the obtainment of the data is completed, in operation 83, the electronic device 800 may allow the external device 810 to move to a previous location or a specified location. According to an embodiment, the electronic device 800 may store information associated with the previous location or the specified location of the external device 810.

According to an embodiment, the external device 810 may perform 2.4 GHz communication and then may determine whether to connect to 60 GHz communication; when determining the 60 GHz communication connection, in operation 81, the external device 810 may move within the 60 GHz coverage for 60 GHz communication with the electronic device 800.

According to an embodiment, the external device 810 may determine the 60 GHz communication connection or may obtain information about the 60 GHz communication connection from the electronic device 800 to determine the 60 GHz communication connection.

The external device 810 may move within the 60 GHz coverage by its own determination in response to the determination or may move based on a control signal from the external device 810.

According to an embodiment, in operation 82, the external device 810 may make the 60 GHz communication connection and may transmit data to the electronic device 800 through the 60 GHz communication. The external device 810 may transmit the data to the electronic device 800 in real time or may back up the stored data in the electronic device 800.

When the data backup is completed, in operation 83, the external device 810 may move to the previous location again. According to an embodiment, the external device 810 may move to the previous location by the control of the electronic device 800 or its own determination.

According to an embodiment, when the external device 810 moves to the previous location, the external device 810 may move to the previous location based on information associated with the previous location or the specified location. According to an embodiment, the external device 810 may move to the previous location based on data (e.g., GPS information, latitude, longitude, a distance from the electronic device 800, or a ground image obtained at the previous location) associated with the previous location or the specified location. For example, the external device 810 may compare the currently obtained image with the ground image obtained at the previous location; when the degree of the comparison result is not less than a specific level, the external device 810 may determine that the current location is the previous location. The information associated with the previous location or specified location may be stored in the external device 810 or may be obtained from the electronic device 800.

FIG. 9 is an operation flowchart of an electronic device according to a scenario of FIG. 8.

The operations illustrated in FIG. 9 may be performed by the electronic device 100 of FIG. 1 (or the electronic device 800 of FIG. 8) or the external device 810. For example, the operations may be implemented with instructions capable of being performed (or executed) by the processor 110 of the electronic device 100. The instructions may be stored in, for example, a computer-readable recording medium or the electronic device 100 illustrated in FIG. 1. Hereinafter, in the description of FIG. 9, the instructions may be collectively referred to as the "operation of an electronic device" and an embodiment may be described.

According to an embodiment, the electronic device may control the electronic device or the external device such that an external device is located within a coverage in which second communication is possible.

In operation 901, the electronic device may make a first communication connection to the external device for the purpose of controlling the external device. The electronic device may use a first communication circuit (the first communication circuit 131 of FIG. 1) for the first communication connection.

In operation 903, the electronic device may obtain information associated with the state of the external device through the first communication.

In operation 905, the electronic device may determine whether to make the second communication connection. The electronic device may determine whether to make the second communication connection, based on information associated with the state or information about the electronic device. When not making the second communication connection, the electronic device may perform an operation of obtaining the information associated with the state in operation 903. According to an embodiment, the information associated with the state may be included in the control signal.

The case of attempting the 60 GHz communication may include the case where the electronic device and the external device approach a coverage in which the 60 GHz communication is possible, are able to be close to the coverage, or transmit high-capacity data (e.g., high-definition image data) in real time, the case where the memory capacity of the external device or the electronic device is insufficient, or the like.

When determining the connection to the second communication, in operation 907, an operation associated with the second communication may be activated, and the external device and/or the electronic device may move. The electronic device may control the external device such that the external device approaches the electronic device and thus is located within a coverage in which the second communication is possible. According to an embodiment, when controlling the external device, the electronic device may use the first communication.

In operation 909, the electronic device may make the second communication connection to the external device. The electronic device and the external device may make the second communication connection within the coverage in which the second communication connection is possible. The second communication connection may be performed through a second communication circuit (e.g., the second communication circuit 132 of FIG. 1 or the second communication circuit 232 of FIG. 2).

According to an embodiment, the electronic device may allow the external device to move to a predetermined location, a location determined in real time, or a location determined based on a relative location. Alternatively, the electronic device may transmit a control signal such that the external device moves, and the external device may determine the location by itself. The external device may move within the coverage by its own determination.

In operation 911, the electronic device may receive data from the external device. For example, the data may include at least one audio data, at least one image data, or at least one video data. The received data may include control information or may not include the control information. The electronic device may receive the data through the second communication.

In operation 913, the electronic device may terminate the second communication when the reception of the data is terminated. The electronic device may terminate the second communication and may deactivate an operation associated with the second communication. The electronic device may disconnect the second communication connection. The deactivating of the operation associated with the second communication may be an operation of allowing the second communication circuit not to make the second communication or terminating an application associated with the second communication.

Hereinafter, each operation will be described in detail. Operations that are not described below may be referred to the description of FIG. 4.

When the second communication connection between the electronic device and the external device is completed in operation 909, the electronic device and the external device may perform the following operation.

For example, the electronic device may perform a data backup operation of the external device through the second communication with the external device or may perform real-time data transmission and/or reception through the second communication with the external device. For example, the electronic device may receive data (e.g., a captured image) from the external device by using the second communication.

According to an embodiment, data transmission and reception time may be determined based on a specified time, the flying time of the external device within the coverage, the storage space of the external device in units of captured images, or the like. For example, the external device may transmit data only in an area overlapping at least partly with the coverage of the second communication band in the expected flight path, or may transmit data only for a specified time. The electronic device may receive data only in an area overlapping at least partly with the coverage of the second communication band in the expected flight path of the external device, or may receive data only for a specified time.

According to an embodiment, after receiving data from the external device, the electronic device may allow the external device to delete original data, which has been backed up or transmitted.

According to an embodiment, the external device may transmit at least part of an image being captured and may maintain an operation of capturing an image. In this case, the received files may include at least partly overlapping part, and the electronic device may generate the received plurality of image files as one file.

According to an embodiment, the electronic device may output the data received from the external device, through a display. The electronic device may store and output the data received from the external device.

When the electronic device and the external device may complete the execution of the operation associated through the second communication connection in operation 913, the electronic device or the external device may terminate the second communication connection and may deactivate the related operation. For example, when data reception from the external device is completed, the electronic device may terminate the second communication connection through the second communication circuit and may deactivate the operation associated with the second communication circuit of the electronic device.

According to an embodiment, the electronic device may generate a control signal that controls the external device to deactivate the operation associated with the second communication and to return to the previous location.

According to an embodiment, when data transmission and reception through the second communication is completed, the electronic device may not apply the power of the second communication circuit or may make it possible to enter a (deep) sleep mode. The electronic device may not apply the power of the second communication circuit of the external device or may make it possible to enter a (deep) sleep mode.

When the second communication is terminated although not illustrated in FIG. 9, the electronic device may return to the original location or may control the external device to return to the original location. To this end, the electronic device and/or the external device may store location information or direction information, or the like before the movement, in a memory. When not storing information about the previous location, the external device may fly at the current location or may move based on a user input.

The operation illustrated in FIG. 9 may be identically performed from the point of view of the external device. In this case, in FIG. 9, the external device may perform an operation of transmitting data to the electronic device.

Hereinafter, the operation of the external device will be described in detail. For the purpose of transmitting and/or receiving a control signal to and/or from the electronic device, the external device may make the first communication connection through the first communication circuit. When the electronic device is a manipulation device, the external device may be an unmanned flight device. On the other hand, when the electronic device is the unmanned flight device, the external device may be a manipulation device.

According to an embodiment, the external device may transmit and/or receive information about the location, the direction, or the like of the electronic device, and may determine whether to connect to the second communication, based on the information. The determination as to whether to connect to the second communication may be referred to as a method of determining whether to connect to the second communication of the electronic device of FIG. 5.

The case of attempting the 60 GHz communication may include the case where the electronic device and the external device approach a coverage in which the 60 GHz communication is possible, are able to be close to the coverage, or transmit high-capacity data (e.g., high-definition image data) in real time.

According to an embodiment, when determining the connection to the second communication, the external device may activate an operation associated with the second communication circuit.

According to an embodiment, when the second communication connection is needed, the external device may transmit information associated with the second communication connection to the electronic device. The information associated with the second communication connection may be information for providing a notification of the determining of the second communication connection of the external device.

According to an embodiment, the external device may receive a control signal or specified information for moving to a coverage range of the second communication or a specified location, which is obtained through the first communication, from the electronic device. The control signal or the specified information may be transmitted from the electronic device when the second communication connection of the electronic device is determined, or may be transmitted from the electronic device in response to information associated with the second communication connection. The external device may obtain the control signal or the specified information through the first communication.

According to an embodiment, the external device may move based on the control signal or the specified information.

According to an embodiment, the external device may obtain the information associated with the second communication connection from the electronic device; or when obtaining the control signal, the external device may activate an operation associated with the second communication circuit.

According to an embodiment, the electronic device may make the second communication connection by using the beamforming attribute determined based on a relative location with the external device. The determination of the beamforming attribute may be referred to the descriptions given with reference to FIGS. 6 and 7.

The external device may be executed in a STA mode, an AP mode, or a P2P mode for the second communication connection to the electronic device. The external device may operate in the STA mode or the P2P (GC) mode to reduce the current consumption. In the case where the external device operates in the GC mode, a scan operation may be performed to find an external device operating in the AP mode or the P2P (GO) mode; a communication connection may be made when the external device is found. The external device may transmit and/or receive information associated with the connection to the electronic device, through the first communication. At this time, the transmitted and/or received information may include an SSID, device information, channel information, sector information, a password, and/or a beam direction, as information associated with scan and connection.

According to an embodiment, the external device may transmit data through the second communication circuit. The external device may perform the data backup operation or real-time data transmission of the external device, through the second communication. According to an embodiment, the external device may transmit at least part of an image being captured and may maintain an operation of capturing an image.

According to an embodiment, the external device may determine data transmission and reception time based on a specified time, the flying time of the external device within the coverage, the storage space of the external device in units of captured images, or the like. For example, the external device may back up data only in an area overlapping at least partly with the coverage of the second communication band in the expected flight path, or may back up data only for a specified time. After receiving data from the external device, the electronic device may allow the external device to delete original data, which has been backed up.

The second communication connection of the external device may be terminated as follows. When completing data transmission to the electronic device, the external device may terminate the second communication connection through the second communication circuit and may receive a control signal for deactivating an operation associated with the second communication and then returning to the previous location, from the electronic device or may move to a location before the second communication, based on pre-stored previous location information. When the previous location is not stored, the external device may fly at the current location or may move based on an input associated with a user's flight.

According to an embodiment, the external device may delete the original data, which has been backed up or transmitted, after transmitting data. The external device may delete data by its own determination or based on the control signal of the electronic device.

According to an embodiment, when completing data transmission through the second communication connection, the external device may terminate the second communication connection and may deactivate an operation associated with the second communication. The external device may deactivate the operation associated with the second communication, by its own determination or based on the control signal of the electronic device.

According to an embodiment, when data transmission and reception through the second communication is completed, the external device may not apply the power of the second communication circuit or may make it possible to enter a (deep) sleep mode.

According to an embodiment, the external device may return to the previous location or the specified location based on pre-stored previous location information or specified location information or based on the previous location information or the specified location information, which is obtained from the electronic device.

When not storing the previous location information or the specified location information, the external device may fly at the current location or may move based on a user input.

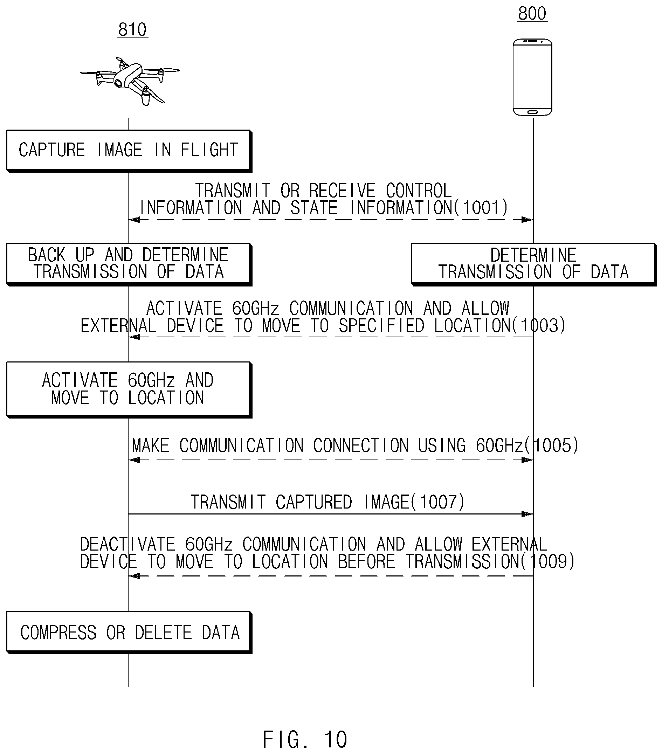

According to an embodiment, the external device may move to the previous location or the specified location based on at least one of data (e.g., GPS information, latitude, and longitude) associated with the obtained location, a distance from the electronic device, or a ground image obtained at the previous location. For example, the external device may compare the currently obtained image with the ground image obtained at the previous location; when the degree of the comparison result is not less than a specific level, the external device 810 may determine that the current location is the previous location. FIG. 10 is an operation flowchart between an external device and an electronic device according to a scenario of FIG. 8.

An operation between the external device 810 (e.g., the external device 810 of FIG. 8) and the electronic device 800 (e.g., the electronic device 800 of FIG. 8) will be described with reference to FIG. 10.

While flying, the external device 810 may capture an image or the like. In this case, the external device 810 may operate within the 2.4 GHz communication coverage. In operation 1001, the electronic device 800 and the external device 810 may exchange data associated with the state or the location of each of the electronic device 800 and the unmanned flight device 810, with each other.

The electronic device 800 and the external device 810 may determine whether to make the 60 GHz communication connection. For example, when the electronic device 800 and the external device 810 determines that data (e.g., a captured image) needs to be transmitted, in operation 1003, the electronic device 800 may activate 60 GHz communication and may allow the external device 810 to activate 60 GHz communication and to move to a specified location (e.g., a coverage area in which 60 GHz communication is possible). Under control of the electronic device 800, the external device 810 may activate the 60 GHz communication and may move to the specified location.

In operation 1005, the external device 810 and the electronic device 800 may make the 60 GHz communication connection. In operation 1007, the external device 810 may transmit (or back up) a captured image through the 60 GHz communication connection to the electronic device 800.

In operation 1009, the electronic device 800 may deactivate an operation associated with the 60 GHz communication of the external device 810 and may allow the external device 810 to move to a location before the backup. At this time, the electronic device 800 may deactivate the operation associated with the 60 GHz communication.

The external device 810 may move to the original location and may compress or delete the backup image.

In addition, the above-described embodiments may be applied to various scenarios or may be changed.

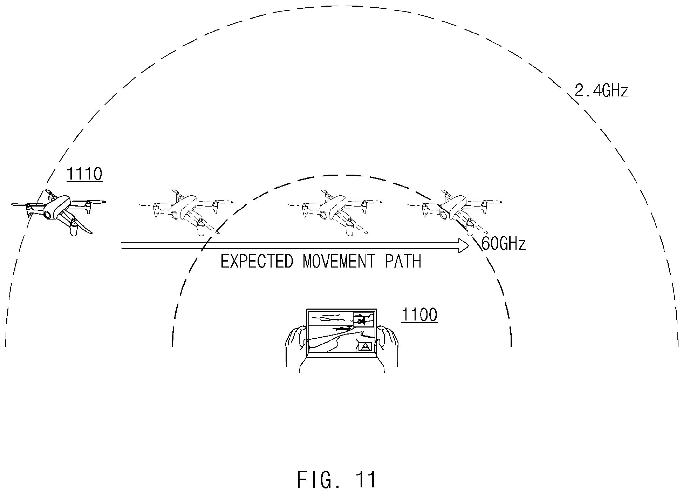

FIG. 11 illustrates an operation scenario between an electronic device and an external device, according to an embodiment.

The configuration of an electronic device 1100 of FIG. 11 may be the same as or similar to the configuration of the electronic device 100 of FIG. 1, and the configuration of an external device 1110 may be the same as or similar to the configuration of the external device 200 of FIG. 2.

According to an embodiment, the external device 1110 may back up data based on a movement path (e.g., a flight path). For example, when the movement path of the external device 1110 overlaps at least partly with the 60 GHz coverage in which data transmission or data backup is possible, the unmanned flight device 1110 may activate the 60 GHz communication, and then may back up data or may transmit data in real time, while flying through a 60 GHz band.

According to an embodiment, the external device 1110 may determine whether the expected movement path overlaps with the 60 GHz coverage. The external device 1110 may determine whether the movement path overlaps with the 60 GHz coverage, based on at least one of a movement direction, a speed, information associated with a current location, or a distance from the electronic device 1100; when the movement path overlaps with the 60 GHz coverage, the external device 1110 may activate the 60 GHz communication.

According to an embodiment, the external device 1110 may determine whether to transmit data, within a coverage in which the 60 GHz communication is possible based on at least one of a time period when the 60 GHz communication is maintained, the amount of data to be transmitted, the importance of data to be transmitted, or the data transmission speed. For example, in the case where the amount of data to be transmitted is small (or in the case where the space of the memory is sufficient), the external device 1110 may determine not to transmit the data. In this case, the external device 1110 may determine not to activate the 60 GHz communication.

According to an embodiment, in the case where the amount of data to be transmitted within a time period when the communication of the electronic device 1100 is maintained is small, the external device 1110 may not transmit the data. For example, in the case where it is difficult to transmit the specific amount of data while the 60 GHz coverage overlaps with the movement path, the external device 1110 may not activate the 60 GHz communication.

According to an embodiment, the external device 1110 may control a beam direction, a beam width, beam strength, or the like depending on the movement so as to be suitable toward the electronic device 1100. For example, a method of determining the beam direction, the beam width, the beam strength, or the like may be referred to the descriptions given with reference to FIGS. 5 to 9.

FIG. 12 illustrates an operation scenario between an electronic device and an external device, according to an embodiment.

According to an embodiment, an external device 1210 may operate while there is a relay device 1220 acting as a relay operation between the electronic device 1200 and the external device 1210. According to an embodiment, the relay device 1220 may be an unmanned flight device such as a drone. The configuration of an electronic device 1200 of FIG. 12 may be the same as or similar to the configuration of the electronic device 100 of FIG. 1, and the configuration of the external device 1210 and the relay device 1220 may be the same as or similar to the configuration of the external device 200 of FIG. 2.

According to an embodiment, the external device 1210 may transmit the data to another electronic device such as the relay device 1220, without transmitting the data to the electronic device 1200 as a manipulation device for controlling the operation of the external device 1210. For example, the external device 1210 may transmit the data to the relay device 1220, and the relay device 1220 may transmit the corresponding data to the electronic device 1200 or another storage unit.

According to an embodiment, the transmission of the data may include an operation of backing up the data or transmitting the data in real time. For example, the external device 1210 may back up the data in the relay device 1220 or may transmit the data to the relay device 1220 in real time, and the relay device 1220 may transmit the obtained data to the electronic device 1200, in real time or after the reception of at least part of the data is completed.

According to an embodiment, the operation described in FIGS. 5 to 11 may be performed between the external device 1210 and the relay device 1220.

According to an embodiment, when the external device 1210 attempts to communicate with the relay device 1220, the external device 1210 may activate an operation associated with the 60 GHz communication. When the external device 1210 activates the operation associated with the 60 GHz communication and is located outside a coverage in which the 60 GHz communication is possible, in operation 121, the external device 1210 may move within the coverage in which the 60 GHz communication is possible.

According to an embodiment, after moving within the coverage in which the 60 GHz communication is possible, in operation 122, the external device 1210 may transmit the data to the relay device 1220.

According to an embodiment, when the transmission of the data is completed, in operation 123, the external device 1210 may deactivate the operation associated with the 60 GHz communication and may move to the original location. In addition, the external device 1210 may perform various operations described in FIGS. 5 to 11.

According to an embodiment, the relay device 1220 may be in a 60 GHz communication connection with the electronic device 1200, and in a 2.4 GHz communication connection with the external device 1210. When the 60 GHz communication connection to the external device 1210 is needed, the relay device 1220 may transmit information about the 60 GHz communication connection to the external device 1210. In operation 121, the relay device 1220 may transmit a control signal such that the external device 1210 moves within a coverage in which the 60 GHz communication is possible.

According to an embodiment, when the external device 1210 moves within the coverage in which the 60 GHz communication is possible, the relay device 1220 may make the 60 GHz communication connection to the external device 1210. In this case, the relay device 1220 may be in a 60 GHz communication connection state together with the external device 1210 and the electronic device 1200. In operation 122, the relay device 1220 may obtain data from the external device 1210. The relay device 1220 may obtain the data from the external device 1210 in real time or may back up the data.

According to an embodiment, when the reception of the data is completed, the relay device 1220 may disconnect the 60 GHz communication connection to the external device 1210.

According to an embodiment, in operation 123, the relay device 1220 may transmit a control signal to the external device 1210 such that the external device 1210 moves to a previous location. In addition, the relay device 1220 may perform operations of the electronic devices described in FIGS. 5 to 9.

As such, the autonomy and the range of the flight of the external device, which is being capturing an image, are widened. In addition, in the case where there are a plurality of relay devices 1220, it is possible to transmit data in a wider range at a faster period. In other words, the relay device 1220 may be a device that increases the autonomy of the flight while widening the coverage of 60 GHz.

According to an embodiment, the relay device 1220 may include a device that performs only data backup or data delivery without widening the coverage.

Besides, an external device (e.g., the external device 200 of FIG. 2, the external device 310 of FIG. 3 or the external device 810 of FIG. 8) may be used as a capture device for broadcasting. For example, in the case of relaying the Alpine ski, it is possible to relay broadcasting using an external device (e.g., an unmanned flight device) including a broadcasting antenna for each section, in real time.

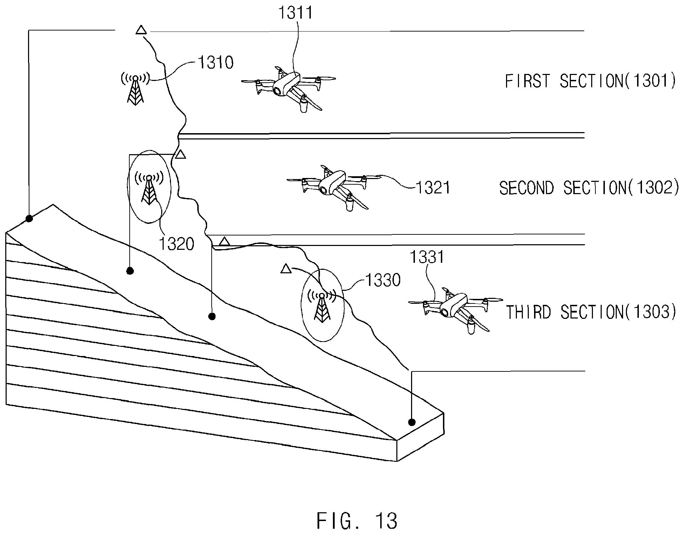

FIG. 13 illustrates a communication method for broadcast relay between an electronic device and an external device, according to an embodiment.

According to an embodiment, each of electronic devices 1310, 1320, and 1330 may be an electronic device including a broadcasting antenna. The configuration of each of the electronic devices 1310, 1320, and 1330 may be the same as or similar to the configuration of the electronic device 100 of FIG. 1. The configuration of each of external devices 1311, 1321, and 1331 may be the same as or similar to the configuration of the external device 200 of FIG. 2.

According to an embodiment, the electronic devices 1310, 1320, and 1330 and the external devices 1311, 1321, and 1331 may transmit or receive high-capacity data for broadcasting communication.

According to an embodiment, for broadcast transmission, the electronic devices 1310, 1320, and 1330 may be located at specific section intervals. The first electronic device 1310 may be a device that transmits a broadcasting image of a first section 1301. The second electronic device 1320 may be a device that transmits a broadcasting image of a second section 1302. The third electronic device 1330 may be a device that transmits a broadcasting image of a third section 1303.

The external devices 1311, 1321, and 1331 may transmit high-capacity data to the electronic devices 1310, 1320, and 1330 using an ultra-high frequency band such as a 60 GHz band during the movement in real time or may store the high-capacity data and may back up the high-capacity data in the electronic devices 1310, 1320, and 1330.

The first external device 1311 may be configured to move within a coverage in which second communication (e.g., 60 GHz communication) is possible. The first external device 1311 may capture a broadcasting image of the first section 1301 together with the first electronic device 1310 and may connect to 60 GHz communication to transmit the captured broadcasting image data to the first electronic device 1310 through the 60 GHz communication. According to an embodiment, while performing 60 GHz communication, the first external device 1311 may capture a broadcasting image and may transmit the obtained data (or a broadcasting image) to the first electronic device 1310. The first external device 1311 may transmit data to the first electronic device 1310 in real time or may back up the data. In this case, while moving, the first external device 1311 and/or the first electronic device 1310 may control the beamforming attribute of the corresponding device or a counterpart device.

The second external device 1321 may transmit data of the second section 1302 to the second electronic device 1320 through the 60 GHz communication in real time or may back up the data of the second section 1302. The third external device 1331 may transmit data of the third section 1303 to the third electronic device 1330 through the 60 GHz communication in real time or may back up the data of the third section 1303. To this end, the second external device 1321 may be configured to be located within a coverage in which the 60 GHz communication with the second electronic device 1320 is possible. The third external device 1331 may be configured to remain within a coverage in which the 60 GHz communication with the third electronic device 1330 is possible.

According to an embodiment, a specific section may be allocated to the first external device 1311. For example, the first external device 1311 may move in a specified section (e.g., the first section 1301) and may transmit data. According to an embodiment, the first external device 1311 may be configured to move to a section in which the 60 GHz communication is possible and may capture an image while performing the 60 GHz communication. While performing the 60 GHz communication, the second external device 1321, and/or the third external device 1331 may also capture an image in the allocated section.

According to an embodiment, while moving within a coverage in which the 60 GHz communication to the plurality of electronic devices 1310, 1320, and 1330, the first external device 1311 may transmit data to the plurality of electronic devices 1310, 1320, and 1330.

According to an embodiment, the external devices 1311, 1321, and 1331 may activate the 60 GHz communication and may perform an operation of optimizing beamforming on the electronic devices 1310, 1320, and 1330. Herein, the operation of each of the external devices 1311, 1321, and 1331 may be referred to as the operation of the external device (e.g., the external device 310 of FIGS. 5 to 7) of FIGS. 5 to 12. The operation of each of the electronic devices 1310, 1320, and 1330 may be referred to as the operation of the electronic device (e.g., the electronic device 300 of FIGS. 5 to 7) of FIGS. 5 to 12.

As such, when communication between a movable electronic device and a device of an ultra-high frequency band is used, the movable electronic device may be used as broadcast imaging equipment. For example, in the case of relaying the Alpine ski, an electronic device including a broadcasting antenna for each section may be disposed, and real-time broadcast relays may be possible for each section when communication is performed by using a movable electronic device. Each of the external devices 1311, 1321, and 1331 may transmit data of a specific section to the electronic devices 1310, 1320, and 1330.

According to various embodiments of the present disclosure, an external device or an electronic device may be variously changed. For example, when an unmanned flight device is an autonomous flight device, data may be backed up in a specific electronic device even in the case where it is not an electronic device as a manipulation device.

FIG. 14 is a block diagram of an electronic device 1401 in a network environment 1400 according to various embodiments.

Referring to FIG. 14, the electronic device 1401 (e.g., the electronic device 100 of FIG. 1) may communicate with an electronic device 1402 through a first network 1498 (e.g., a short-range wireless communication) or may communicate with an electronic device 1404 (e.g., the unmanned flight device 200 of FIG. 2) or a server 1408 through a second network 1499 (e.g., a long-distance wireless communication) in the network environment 1400. According to an embodiment, the electronic device 1401 may communicate with the electronic device 1404 through the server 1408. According to an embodiment, the electronic device 1401 may include a processor 1420, a memory 1430, an input device 1450, a sound output device 1455, a display device 1460, an audio module 1470, a sensor module 1476, an interface 1477, a haptic module 1479, a camera module 1480, a power management module 1488, a battery 1489, a communication module 1490, a subscriber identification module 1496, and an antenna module 1497. According to some embodiments, at least one (e.g., the display device 1460 or the camera module 1480) among components of the electronic device 1401 may be omitted or other components may be added to the electronic device 1401. According to some embodiments, some components may be integrated and implemented as in the case of the sensor module 1476 (e.g., a fingerprint sensor, an iris sensor, or an illuminance sensor) embedded in the display device 1460 (e.g., a display).

The processor 1420 may operate, for example, software (e.g., a program 1440) to control at least one of other components (e.g., a hardware or software component) of the electronic device 1401 connected to the processor 1420 and may process and compute a variety of data. The processor 1420 may load a command set or data, which is received from other components (e.g., the sensor module 1476 or the communication module 1490), into a volatile memory 1432, may process the loaded command or data, and may store result data into a nonvolatile memory 1434. According to an embodiment, the processor 1420 may include a main processor 1421 (e.g., a central processing unit or an application processor) and an auxiliary processor 1423 (e.g., a graphic processing device, an image signal processor, a sensor hub processor, or a communication processor), which operates independently from the main processor 1421, additionally or alternatively uses less power than the main processor 1421, or is specified to a designated function. In this case, the auxiliary processor 1423 may operate separately from the main processor 1421 or embedded.

In this case, the auxiliary processor 1423 may control, for example, at least some of functions or states associated with at least one component (e.g., the display device 1460, the sensor module 1476, or the communication module 1490) among the components of the electronic device 1401 instead of the main processor 1421 while the main processor 1421 is in an inactive (e.g., sleep) state or together with the main processor 1421 while the main processor 1421 is in an active (e.g., an application execution) state. According to an embodiment, the auxiliary processor 1423 (e.g., the image signal processor or the communication processor) may be implemented as a part of another component (e.g., the camera module 1480 or the communication module 1490) that is functionally related to the auxiliary processor 1423. The memory 1430 may store a variety of data used by at least one component (e.g., the processor 1420 or the sensor module 1476) of the electronic device 1401, for example, software (e.g., the program 1440) and input data or output data with respect to commands associated with the software. The memory 1430 may include the volatile memory 1432 or the nonvolatile memory 1434.

The program 1440 may be stored in the memory 1430 as software and may include, for example, an operating system 1442, a middleware 1444, or an application 1446.

The input device 1450 may be a device for receiving a command or data, which is used for a component (e.g., the processor 1420) of the electronic device 1401, from an outside (e.g., a user) of the electronic device 1401 and may include, for example, a microphone, a mouse, or a keyboard.

The sound output device 1455 may be a device for outputting a sound signal to the outside of the electronic device 1401 and may include, for example, a speaker used for general purposes, such as multimedia play or recordings play, and a receiver used only for receiving calls. According to an embodiment, the receiver and the speaker may be either integrally or separately implemented.

The display device 1460 may be a device for visually presenting information to the user and may include, for example, a display, a hologram device, or a projector and a control circuit for controlling a corresponding device. According to an embodiment, the display device 1460 may include a touch circuitry or a pressure sensor for measuring an intensity of pressure on the touch.

The audio module 1470 may convert a sound and an electrical signal in dual directions. According to an embodiment, the audio module 1470 may obtain the sound through the input device 1450 or may output the sound through an external electronic device (e.g., the electronic device 1402 (e.g., a speaker or a headphone)) wired or wirelessly connected to the sound output device 1455 or the electronic device 1401.

The sensor module 1476 may generate an electrical signal or a data value corresponding to an operating state (e.g., power or temperature) inside or an environmental state outside the electronic device 1401. The sensor module 1476 may include, for example, a gesture sensor, a gyro sensor, a barometric pressure sensor, a magnetic sensor, an acceleration sensor, a grip sensor, a proximity sensor, a color sensor, an infrared sensor, a biometric sensor, a temperature sensor, a humidity sensor, or an illuminance sensor.

The interface 1477 may support a designated protocol wired or wirelessly connected to the external electronic device (e.g., the electronic device 1402). According to an embodiment, the interface 1477 may include, for example, an HDMI (high-definition multimedia interface), a USB (universal serial bus) interface, an SD card interface, or an audio interface.

A connecting terminal 1478 may include a connector that physically connects the electronic device 1401 to the external electronic device (e.g., the electronic device 1402), for example, an HDMI connector, a USB connector, an SD card connector, or an audio connector (e.g., a headphone connector).

The haptic module 1479 may convert an electrical signal to a mechanical stimulation (e.g., vibration or movement) or an electrical stimulation perceived by the user through tactile or kinesthetic sensations. The haptic module 1479 may include, for example, a motor, a piezoelectric element, or an electric stimulator.

The camera module 1480 may shoot a still image or a video image. According to an embodiment, the camera module 1480 may include, for example, at least one lens, an image sensor, an image signal processor, or a flash.

The power management module 1488 may be a module for managing power supplied to the electronic device 1401 and may serve as at least a part of a power management integrated circuit (PMIC).

The battery 1489 may be a device for supplying power to at least one component of the electronic device 1401 and may include, for example, a non-rechargeable (primary) battery, a rechargeable (secondary) battery, or a fuel cell.

The communication module 1490 may establish a wired or wireless communication channel between the electronic device 1401 and the external electronic device (e.g., the electronic device 1402, the electronic device 1404, or the server 1408) and support communication execution through the established communication channel. The communication module 1490 may include at least one communication processor operating independently from the processor 1420 (e.g., the application processor) and supporting the wired communication or the wireless communication. According to an embodiment, the communication module 1490 may include a wireless communication module 1492 (e.g., a cellular communication module, a short-range wireless communication module, or a GNSS (global navigation satellite system) communication module) or a wired communication module 1494 (e.g., an LAN (local area network) communication module or a power line communication module) and may communicate with the external electronic device using a corresponding communication module among them through the first network 1498 (e.g., the short-range communication network such as a Bluetooth, a Wi-Fi direct, or an IrDA (infrared data association)) or the second network 1499 (e.g., the long-distance wireless communication network such as a cellular network, an internet, or a computer network (e.g., LAN or WAN)). The above-mentioned various communication modules 1490 may be implemented into one chip or into separate chips, respectively.

According to an embodiment, the wireless communication module 1492 may identify and authenticate the electronic device 1401 using user information stored in the subscriber identification module 1496 in the communication network.

The antenna module 1497 may include one or more antennas to transmit or receive the signal or power to or from an external source. According to an embodiment, the communication module 1490 (e.g., the wireless communication module 1492) may transmit or receive the signal to or from the external electronic device through the antenna suitable for the communication method.

Some components among the components may be connected to each other through a communication method (e.g., a bus, a GPIO (general purpose input/output), an SPI (serial peripheral interface), or an MIPI (mobile industry processor interface)) used between peripheral devices to exchange signals (e.g., a command or data) with each other.

According to an embodiment, the command or data may be transmitted or received between the electronic device 1401 and the external electronic device 1404 through the server 1408 connected to the second network 1499. Each of the electronic devices 1402 and 1404 may be the same or different types as or from the electronic device 1401. According to an embodiment, all or some of the operations performed by the electronic device 1401 may be performed by another electronic device or a plurality of external electronic devices. When the electronic device 1401 performs some functions or services automatically or by request, the electronic device 1401 may request the external electronic device to perform at least some of the functions related to the functions or services, in addition to or instead of performing the functions or services by itself. The external electronic device receiving the request may carry out the requested function or the additional function and transmit the result to the electronic device 1401. The electronic device 1401 may provide the requested functions or services based on the received result as is or after additionally processing the received result. To this end, for example, a cloud computing, distributed computing, or client-server computing technology may be used.

FIG. 15 is a block diagram of an unmanned flight device, according to an embodiment.

Referring to FIG. 15, the unmanned flight device 1500 (e.g., the external electronic device 200 of FIG. 2) may include a flight body 1501 and an imaging device 1505 that is mounted in the flight body 1501 and captures an image. The flight body 1501 may include a flight driving unit for the flight of the unmanned flight device 1500, a control unit for controlling the unmanned flight device 1500, a communication unit for communicating with a remote controller (e.g., the electronic device 100), and a power management module 1514 for managing the power of the unmanned flight device 1500.

The flight driving unit may generate power that floats the flight body 1501 in the air. According to an embodiment, the flight driving unit may include at least one propeller 1522, a motor 1521 for rotating the propeller 1522, a motor driving circuit 1519 for driving the motor 1521, and a motor control unit (e.g., a micro processing unit (MPU) 1518) for applying a control signal to the motor driving circuit 1519.

The control unit may drive the flight driving unit depending on the control signal received from the remote controller through the communication unit to control the movement of the unmanned flight device 1500. For example, the control unit may perform data processing or an operation associated with control and/or communication of at least one other component(s) of the unmanned flight device 1500. The control unit may be connected to the communication unit (e.g., a communication module 1513), a memory 1512, and a motor control unit so as to control each of components. The control unit may include at least one processor (e.g., an application processor (AP) 1511). According to an embodiment, the control unit may include a processor (e.g., a MCU 1516), which is connected to a sensor module 1517 and collectively manages the motor control unit.

The communication unit (e.g., the communication module 1513) (or the communication circuit) may receive the control signal of the remote controller for the control of the unmanned flight device 1500. Furthermore, the communication unit may transmit information about the flight state of the unmanned flight device 1500 to the remote controller.

The power management module 1514 may manage the power of the unmanned flight device 1500. According to an embodiment, the power management module 1514 may include a power management integrated circuit (PMIC), a charger IC, or a battery (or fuel) gauge. The PMIC may have a wired charging method and/or a wireless charging method. The wireless charging method may include, for example, a magnetic resonance method, a magnetic induction method or an electromagnetic method and may further include an additional circuit for the wireless charging, for example, a coil loop, a resonant circuit, or a rectifier, and the like. The battery gauge may measure, for example, a remaining capacity of the battery 1515 and a voltage, current or temperature thereof while the battery is charged. The battery 1515 may include, for example, a rechargeable battery or a solar battery.

The imaging device 1505 may be mounted in the flight body 1501. The imaging device 1505 may photograph a still image and a video. The imaging device 1505 may include a camera module 1570 controlling at least one camera 1571, and a frame driving unit for controlling direction change or the like of the imaging device 1505.

The camera module 1570 may receive a camera driving signal from the control unit included in the flight body 1501 to control the camera 1571. For example, the camera module 1570 may receive a capture start signal, a pause signal, or a stop signal from the control unit to control the camera 1571. According to an embodiment, the camera module 1570 may be connected to a first connector 1532 provided in a first printed circuit board 1510, through a first flexible printed circuit board (FPCB) 1534 and may receive a camera driving signal from the AP 1511 connected to the first connector 1532.

The frame driving unit may control the direction change or the like of a frame in which a camera is installed. The frame driving unit may include at least one motor 1561 for rotating the frame, a motor driving circuit 1552 for driving the motor 1561, and a motor control unit (e.g., a MPU 1551) for applying a control signal to the motor driving circuit 1552. For example, the frame driving unit may receive a pitch up/down signal of a camera frame, a roll left/right signal of the camera frame, or the like from the control unit to rotate the motor 1561, and thus, may change the direction of the frame. According to an embodiment, a part of the frame driving unit may be mounted on a second printed circuit board 1550. Moreover, the motor control unit mounted on the second printed circuit board 1550 may be connected to a second connector 1531 provided in a first printed circuit board 1510, through a second FPCB 1533 and may receive a camera driving signal from the AP 1511 connected to the second connector 1531. In an embodiment, the frame driving unit may further include a sensor module 1553.

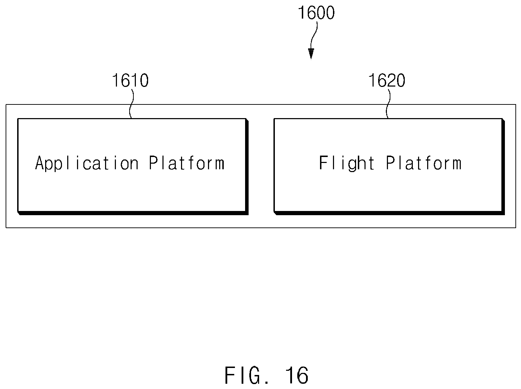

FIG. 16 is a diagram illustrating a platform of an unmanned flight device, according to an embodiment.

Referring to FIG. 16, an unmanned flight device 1600 may include an application platform 1610 and a flight platform 1620. The application platform 1610 may operate in conjunction with an electronic device (e.g., a remote controller) for controlling the unmanned flight device 1600. For example, the application platform 1610 may operate in conjunction with the remote controller through a communication channel such as LTE, or the like. In addition, the application platform 1610 may process a service such as the control of a camera installed in the unmanned flight device 1600, or the like. In an embodiment, the application platform 1610 may generate a control signal of the unmanned flight device 1600 itself through analysis of data of the camera and a sensor, or the like. The application platform 1610 may change a function capable of being supported depending on a user application, or the like. The flight platform 1620 may control the flight of the unmanned flight device 1600 depending on a navigation algorithm.

The electronic device according to various embodiments disclosed in the present disclosure may be various types of devices. The electronic device may include, for example, at least one of a portable communication device (e.g., a smartphone), a computer device, a portable multimedia device, a mobile medical appliance, a camera, a wearable device, or a home appliance. The electronic device according to an embodiment of the present disclosure should not be limited to the above-mentioned devices.

It should be understood that various embodiments of the present disclosure and terms used in the embodiments do not intend to limit technologies disclosed in the present disclosure to the particular forms disclosed herein; rather, the present disclosure should be construed to cover various modifications, equivalents, and/or alternatives of embodiments of the present disclosure. With regard to description of drawings, similar components may be assigned with similar reference numerals. As used herein, singular forms may include plural forms as well unless the context clearly indicates otherwise. In the present disclosure disclosed herein, the expressions "A or B", "at least one of A or/and B", "A, B, or C" or "one or more of A, B, or/and C", and the like used herein may include any and all combinations of one or more of the associated listed items. The expressions "a first", "a second", "the first", or "the second", used in herein, may refer to various components regardless of the order and/or the importance, but do not limit the corresponding components. The above expressions are used merely for the purpose of distinguishing a component from the other components. It should be understood that when a component (e.g., a first component) is referred to as being (operatively or communicatively) "connected," or "coupled," to another component (e.g., a second component), it may be directly connected or coupled directly to the other component or any other component (e.g., a third component) may be interposed between them.

The term "module" used herein may represent, for example, a unit including one or more combinations of hardware, software and firmware. The term "module" may be interchangeably used with the terms "logic", "logical block", "part" and "circuit". The "module" may be a minimum unit of an integrated part or may be a part thereof. The "module" may be a minimum unit for performing one or more functions or a part thereof. For example, the "module" may include an application-specific integrated circuit (ASIC).

Various embodiments of the present disclosure may be implemented by software (e.g., the program 1440) including an instruction stored in a machine-readable storage media (e.g., an internal memory 1436 or an external memory 1438) readable by a machine (e.g., a computer). The machine may be a device that calls the instruction from the machine-readable storage media and operates depending on the called instruction and may include the electronic device (e.g., the electronic device 1401). When the instruction is executed by the processor (e.g., the processor 1420), the processor may perform a function corresponding to the instruction directly or using other components under the control of the processor. The instruction may include a code generated or executed by a compiler or an interpreter. The machine-readable storage media may be provided in the form of non-transitory storage media. Here, the term "non-transitory", as used herein, is a limitation of the medium itself (i.e., tangible, not a signal) as opposed to a limitation on data storage persistency.

According to an embodiment, the method according to various embodiments disclosed in the present disclosure may be provided as a part of a computer program product. The computer program product may be traded between a seller and a buyer as a product. The computer program product may be distributed in the form of machine-readable storage medium (e.g., a compact disc read only memory (CD-ROM)) or may be distributed only through an application store (e.g., a Play Store™). In the case of online distribution, at least a portion of the computer program product may be temporarily stored or generated in a storage medium such as a memory of a manufacturer's server, an application store's server, or a relay server.

Each component (e.g., the module or the program) according to various embodiments may include at least one of the above components, and a portion of the above sub-components may be omitted, or additional other sub-components may be further included. Alternatively or additionally, some components (e.g., the module or the program) may be integrated in one component and may perform the same or similar functions performed by each corresponding components prior to the integration. Operations performed by a module, a programming, or other components according to various embodiments of the present disclosure may be executed sequentially, in parallel, repeatedly, or in a heuristic method. Also, at least some operations may be executed in different sequences, omitted, or other operations may be added.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a housing;
at least one wireless communication circuit positioned inside the housing or connected to the housing, wherein the wireless communication circuit includes an omni-directional first wireless communication circuit having a first frequency and a first coverage and a directional second wireless communication circuit having a second frequency higher than the first frequency and a second coverage smaller than the first coverage;
at least one processor operatively connected to the wireless communication circuit; and
a memory operatively connected to the processor, wherein the memory stores instructions that, when executed, cause the processor to:
obtain control information including data associated with a location of an external device, from the external device through the first wireless communication circuit;
set a beamforming attribute associated with the second wireless communication circuit, based on the data; and
make a communication connection to the external device through the second wireless communication circuit, by using the beamforming attribute.

2. The electronic device of claim 1, wherein the instructions, when executed by the processor, cause the processor to:
transmit or receive non-control information to or from the external device through the second wireless communication circuit.

3. The electronic device of claim 1, wherein the instructions, when executed by the processor, cause the processor to:
determine parameters associated with the beamforming attribute based on the data.

4. The electronic device of claim 1, wherein the control information includes sector information, and
wherein the instructions, when executed by the processor, cause the processor to:
make the communication connection based on the sector information.

5. The electronic device of claim 1, wherein the instructions, when executed by the processor, cause the processor to:
activate an operation associated with the second wireless communication circuit based on the control information.

6. The electronic device of claim 5, wherein the instructions, when executed by the processor, cause the processor to:
turn on the second wireless communication circuit; or
change a mode of the second wireless communication circuit to a wake-up mode.

7. The electronic device of claim 1, wherein each of the first frequency and the second frequency is an unlicensed band.

8. The electronic device of claim 1, wherein the second frequency includes a 60 GHz band.

9. The electronic device of claim 1, wherein the data associated with the location includes at least one of global positioning system (GPS) data, latitude, longitude, altitude, coordinates, azimuth, or housing orientation.

10. The electronic device of claim 2, wherein the non-control information includes at least one of audio data, image data, or video data.

11. The electronic device of claim 1, wherein a communication connection between the external device and the electronic device through the first wireless communication circuit is maintained during the communication connection through the second wireless communication circuit.

12. The electronic device of claim 1, wherein the electronic device includes at least one movement mechanism, at least part of which is embedded in the housing or which is connected to the housing.

13. The electronic device of claim 12, wherein the instructions, when executed by the processor, cause the processor to:
cause the electronic device and the external device to be located within the second coverage.

14. An electronic device comprising:
a housing;
at least one wireless communication circuit positioned inside the housing or connected to the housing, wherein the wireless communication circuit includes an omni-directional first wireless communication circuit having a first frequency and a first coverage and a directional second wireless communication circuit having a second frequency higher than the first frequency and a second coverage smaller than the first coverage;
at least one movement mechanism, at least part of which is embedded in the housing or which is connected to the housing;
a navigation circuit configured to control the movement mechanism;
a processor operatively connected to the wireless communication circuit, the movement mechanism, and the navigation circuit and configured to control the wireless communication circuit, the movement mechanism, and the navigation circuit; and
a memory operatively connected to the processor, wherein the memory stores instructions that, when executed, cause the processor to:
exchange control information with an external device through the first wireless communication circuit, wherein the control information includes first data associated with at least one of a location of the external device and/or a location of the electronic device;
determine whether the electronic device and the external device are spaced apart from each other within the second coverage, based at least partly on the first data;
when the electronic device and the external device are spaced apart from each other beyond the second coverage, cause the electronic device and the external device to move closer to each other so as to be within the second coverage; and
while the electronic device and the external device are spaced apart from each other within the second coverage, exchange non-control information with the external device through the second wireless communication circuit.

15. The electronic device of claim 14, wherein the first data includes at least one of GPS data, latitude, longitude, altitude, coordinates, azimuth, or housing orientation.
